(19) Europäisches Patentamt
European Patent Office
Office européen des brevets

(11) EP 2 933 230 B1

(12) **EUROPEAN PATENT SPECIFICATION**

(45) Date of publication and mention of the grant of the patent:
**03.01.2018 Bulletin 2018/01**

(21) Application number: **15162996.1**

(22) Date of filing: **09.04.2015**

(51) Int Cl.:
***C01G 23/053*** (2006.01)
***C09D 7/12*** (0000.00)
***C01G 23/04*** (2006.01)
***C08K 3/08*** (2006.01)
***C08K 5/5419*** (2006.01)
***C09C 1/36*** (2006.01)
***G02B 1/00*** (2006.01)
***C08K 3/22*** (2006.01)
***C08K 3/36*** (2006.01)
***C09D 1/00*** (2006.01)

(54) **ORGANIC SOLVENT DISPERSION OF TITANIUM OXIDE SOLID-SOLUTION PARTICLES, MAKING METHOD AND COATING COMPOSITION**

ORGANISCHE LÖSUNGSMITTELDISPERSION VON FESTEN TITANOXIDLÖSUNGSTEILCHEN, HERSTELLUNGSVERFAHREN UND BESCHICHTUNGSZUSAMMENSETZUNG

DISPERSION DE SOLVANT ORGANIQUE DE PARTICULES DE POUDRE D'OXYDE DE TITANE, PROCÉDÉ DE FABRICATION ET COMPOSITION DE REVÊTEMENT

(84) Designated Contracting States:
**DE FR GB**

(30) Priority: **16.04.2014 JP 2014084632**
**10.06.2014 JP 2014119709**

(43) Date of publication of application:
**21.10.2015 Bulletin 2015/43**

(73) Proprietor: **Shin-Etsu Chemical Co., Ltd.**
**Chiyoda-ku**
**Tokyo (JP)**

(72) Inventors:
- **Masuda, Kohei**
**Annaka-shi, Gunma (JP)**
- **Higuchi, Koichi**
**Annaka-shi, Gunma (JP)**
- **Furudate, Manabu**
**Kamisu-shi, Ibaraki (JP)**
- **Inoue, Tomohiro**
**Kamisu-shi, Ibaraki (JP)**

(74) Representative: **Stoner, Gerard Patrick et al**
**Mewburn Ellis LLP**
**City Tower**
**40 Basinghall Street**
**London EC2V 5DE (GB)**

(56) References cited:
**EP-A1- 2 865 720**
**EP-A1- 2 868 717**
**US-A1- 2014 023 855**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 2 933 230 B1

## Description

### TECHNICAL FIELD

This invention relates to an organic solvent dispersion of titanium oxide solid-solution particles, a method for preparing the dispersion, and a coating composition. More particularly, it relates to an organic solvent dispersion of titanium oxide solid-solution particles each consisting of a core of tetragonal titanium oxide having tin and manganese incorporated in solid solution and a shell of silicon oxide around the core, which is blended in a coating composition in a high concentration so that the coating composition may maintain a well dispersed state and form a coating devoid of cissing or whitening.

### BACKGROUND

An organic solvent dispersion of titanium oxide solid-solution particles may be used as a UV absorber or refractive index-providing agent in coating compositions. The resulting coating compositions will find a wide variety of applications including weather resistant coating and refractive index-modifying coating. It would be desirable if coating compositions of higher performance are readily available at low cost.

Patent Document 1 discloses a coating composition comprising a titanium oxide dispersion. This is a water dispersion of titanium oxide particles obtained by incorporating a specific element in titanium oxide as solid solution and effecting special surface treatment to form a silica shell therearound. Cohydrolysis of the water dispersion and a silicate yields a coating composition having weather resistance.

Patent Document 2 discloses a method for the preparation of inorganic oxide particles comprising the steps of vaporizing metallic titanium with DC arc plasma into inorganic reactive gas, cooling the gas to form inorganic oxide particles, and doping the particles with a hetero-element such as cobalt or tin. The resulting particles are added to a hard coating composition. In preparing inorganic particles having UV shielding properties, this method needs an extreme reaction environment including high temperature and high vacuum. Such a preparation method requiring a great energy consumption is disadvantageous in the industry. Additionally, a dispersant must be added for uniform dispersion of particles, which causes a reduction in the hardness and adhesion of the coating composition.

Our EP-A-2865720 and EP-A-2868717, published after the present filing date but having overlapping priority dates, disclose coating materials based on organic dispersions containing core-shell microparticles with titanium oxide cores and silicon oxide shells. The cores may contain Sn and Mn, with the ratios Ti/Sn and Ti/Mn from 10 to 1000. After exchange to the organic phase the particles are treated with a disilazane compound $(R^3R^4_2Si)_2NH$ where $R^3$ is $C_1$-$C_{15}$ organic, optionally with (meth)acrylic group and $R^4$ is $C_1$-$C_6$ alkyl.

### Citation List

Patent Document 1: JP-A 2014-019611 (US 20140023855, EP 2708513)
Patent Document 2: JP-A 2012-077267

### THE INVENTION

The coating composition of Patent Document 1 has weather resistance. Since it is prepared by starting with a water dispersion of titanium oxide, cumbersome steps are necessary for the composition to contain titanium oxide in a high concentration. As the water concentration of the coating composition increases, cissing and whitening problems may arise in the coating. To introduce titanium oxide in a high concentration without losses in film physical properties, adjustment of individual factors (including change of thinner composition, change of resin molecular weight, change of curing catalyst, addition of dehydrating agent, dehydrating step and the like) becomes necessary in accordance with a particular resin in the coating composition. Extraordinary trial-and-error procedure are sometimes needed before an optimum composition can be found. In the dispersion of Patent Document 2 wherein titanium oxide particles are dispersed in an organic solvent, the water concentration is not increased even when titanium oxide is introduced in a high concentration. However, the dispersion of Patent Document 2 contains a dispersant, which causes a degradation of film physical properties.

Accordingly, an object herein is to provide new and useful organic solvent dispersions of titanium oxide solid-solution particles, which desirably can be blended in coating compositions to give an improvement in weather resistance without adversely affecting film physical properties (e.g. mar resistance, cissing-free, transparency and adhesion), and for which desirably a suitable formulation can be determined without a need for extraordinary trial-and-error. Methods

for preparing the dispersions are another aspect. Coating compositions comprising such dispersions, and the preparation and use of such compositions, are further aspects.

The invention provides an organic solvent dispersion of titanium oxide solid-solution particles, which has solved the outstanding problems and exhibits improved properties, a method for preparing the dispersion, and a coating composition comprising the dispersion, as defined below.

One aspect as set out in claim 1 is a dispersion of core/shell type tetragonal titanium oxide solid-solution particles in an organic solvent. The core/shell type particles each consist of a core of tetragonal titanium oxide having tin and manganese incorporated in solid solution and a shell of silicon oxide around the core. The core/shell type particles have a volume basis 50% cumulative distribution diameter ($D_{50}$) of up to 50 nm, as measured by the dynamic light scattering method using laser light. The amount of tin incorporated in solid solution is to provide a molar ratio of titanium to tin (Ti/Sn) of 10/1 to 1,000/1, and the amount of manganese incorporated in solid solution is to provide a molar ratio of titanium to manganese (Ti/Mn) of 10/1 to 1,000/1. The organic solvent dispersion further comprises a silicon compound or a (partial) hydrolytic condensate thereof. The silicon compound or (partial) hydrolytic condensate thereof is present in an amount of 5 to 50 parts by weight based on 100 parts by weight of the core/shell type tetragonal titanium oxide solid-solution particles. The silicon compound has the general formula (1):

$$R^1_pR^2_qR^3_rSi(OR^4)_{4-p-q-r} \qquad (1)$$

wherein $R^1$ is hydrogen, a substituted or unsubstituted, monovalent hydrocarbon group of 1 to 20 carbon atoms, or a diorganosiloxy group of up to 50 silicon atoms, $R^2$, $R^3$ and $R^4$ are each independently an alkyl group of 1 to 6 carbon atoms, p is an integer of 1 to 3, q is 0, 1 or 2, r is 0, 1 or 2, and the sum p+q+r is an integer of 1 to 3.

Preferably the core/shell type tetragonal titanium oxide solid-solution particles comprise from 5 to 50% by weight of the shell-forming silicon oxide.

Another aspect as set out in claim 8 is a method for preparing a dispersion of core/shell type tetragonal titanium oxide solid-solution particles in an organic solvent, comprising the steps of:

(A) furnishing a dispersion of core/shell type tetragonal titanium oxide solid-solution particles in water, said core/shell type particles each consisting of a core of tetragonal titanium oxide having tin and manganese incorporated in solid solution and a shell of silicon oxide around the core,
(B) adding a silicon compound or a (partial) hydrolytic condensate thereof to the water dispersion, and effecting reaction to form a reaction mixture,
the silicon compound having the general formula (1):

$$R^1_pR^2_qR^3_rSi(OR^4)_{4-p-q-r} \qquad (1)$$

wherein $R^1$ is hydrogen, a substituted or unsubstituted, monovalent hydrocarbon group of 1 to 20 carbon atoms, or a diorganosiloxy group of up to 50 silicon atoms, $R^2$, $R^3$ and $R^4$ are each independently an alkyl group of 1 to 6 carbon atoms, p is an integer of 1 to 3, q is 0, 1 or 2, r is 0, 1 or 2, and the sum p+q+r is an integer of 1 to 3,
(C) optionally, diluting the reaction mixture with an organic solvent,
(D) concentrating the reaction solution from step (B) or (C) into a concentrated dispersion, and
(E) solvent replacement by an organic solvent.

A further aspect is a coating composition comprising the organic solvent dispersion of core/shell type tetragonal titanium oxide solid-solution particles defined above.

The coating composition may comprise a silicone coating composition in admixture with the organic solvent dispersion of core/shell type tetragonal titanium oxide solid-solution particles.

## ADVANTAGEOUS EFFECTS

We find that the organic solvent dispersion of titanium oxide solid-solution particles disclosed herein may be blended in a coating composition to endow the composition with weather resistance without adversely affecting film physical properties (e.g. mar resistance, cissing-free, and transparency). This formulation can be determined without a need for extraordinary trial-and-error. In some situations a film of the coating composition exhibits superior weather resistance to those films prepared from water dispersions.

## BRIEF DESCRIPTION OF DRAWINGS

FIG. 1 schematically illustrates steps (D) and (E) in a method for preparing an organic solvent dispersion of titanium oxide solid-solution particles in Example 1.

FIG. 2 is a chart showing the particle size and frequency of titanium oxide solid-solution particles obtained in Example 1, on analysis of volume average 50% cumulative distribution diameter.

FIG. 3 is a chart showing the NMR spectrum of titanium oxide solid-solution particles obtained in Example 1.

FURTHER EXPLANATIONS; OPTIONS AND PREFERENCES

The terms "a" and "an" herein do not denote a limitation of quantity, but rather denote the presence of at least one of the referenced item. As used herein, the notation ($C_n$-$C_m$) means a group containing from n to m carbon atoms per group. The terminology "(meth)acrylic" refers collectively to acrylic and methacrylic. Me stands for methyl. The term "particles" is used to mean ultra-fine particles or nano-size particles unless otherwise stated.

Titanium oxide particles

The dispersion contains core/shell type tetragonal titanium oxide solid-solution particles each consisting of a core of tetragonal titanium oxide having tin and manganese incorporated in solid solution and a shell of silicon oxide around the core. The titanium oxide particles or cores used herein are of tetragonal titanium oxide having tin and manganese incorporated in solid solution.

The tin component as one solute is not particularly limited; generally it is derived from a tin salt. Included are tin oxide and tin chalcogenides such as tin sulfide, with tin oxide being preferred. Exemplary tin salts include tin halides such as tin fluoride, tin chloride, tin bromide and tin iodide, tin halogenoids such as tin cyanide and tin isothiocyanide, tin mineral acid salts such as tin nitrate, tin sulfate and tin phosphate, and tin oxide. Of these, tin chloride is preferred for stability and availability. Tin in the tin salt may have a valence of 2 to 4, with tetravalent tin being preferred.

The manganese component as another solute is not particularly limited; generally it is derived from a manganese salt. Included are manganese oxide and manganese chalcogenides such as manganese sulfide, with manganese oxide being preferred. Exemplary manganese salts include manganese halides such as manganese fluoride, manganese chloride, manganese bromide and manganese iodide, manganese halogenoids such as manganese cyanide and manganese isothiocyanide, manganese mineral acid salts such as manganese nitrate, manganese sulfate and manganese phosphate, and manganese oxide. Of these, manganese oxide is preferred for stability and availability. Manganese in the manganese salt may have a valence of 2 to 7, with divalent manganese being preferred.

When tin and manganese form a solid solution with tetragonal titanium oxide, the amount of tin incorporated in solid solution is to provide a molar ratio of titanium to tin (Ti/Sn) of 10/1 to 1,000/1, preferably 20/1 to 200/1, and the amount of manganese incorporated in solid solution is to provide a molar ratio of titanium to manganese (Ti/Mn) of 10/1 to 1,000/1, preferably 20/1 to 200/1. If the amount of tin or manganese in solid solution form is to provide a Ti/Sn or Ti/Mn molar ratio of less than 10, there may be observed considerable light absorption in the visible region assigned to tin and manganese. If the Ti/Sn or Ti/Mn molar ratio exceeds 1,000, photocatalytic activity may not be fully deprived.

The solid solution form of tin and manganese components may be either substitutional or interstitial. The substitutional solid solution refers to a solid solution form in which tin and manganese substitute at the site of titanium (IV) ion in titanium oxide. The interstitial solid solution refers to a solid solution form in which tin and manganese fit in the space between crystal lattices of titanium oxide. The interstitial type tends to create F-center which causes coloring, and due to poor symmetry around a metal ion, the Franck-Condon factor of electro-vibronic transition at the metal ion increases, leading to more absorption of visible light. For this reason, the substitution type is preferred.

If desired, another element may be added to the tetragonal titanium oxide having tin and manganese incorporated in solid solution. The additional element which can be added is at least one element selected from among Group 13 elements, Group 14 elements (exclusive of carbon), first transition series elements, second transition series elements, third transition series elements, and lanthanoids. Preferably the additional element is selected from among Al, B, In, Si, Ge, Zn, Fe, Y, Ga, Zr, Hf, Ta, La, Ce, Pr, Nd, Tb, Dy, and Yb, and mixtures thereof. Also preferably the additional element is complexed with titanium oxide. Herein, the term "complexed" is used in a broad sense and refers to a composite or complex oxide formed through simple mixing or chemical bonding. The complex oxide formed through chemical bonding refers to the form represented by the following formula (2).

$$(M^1O_x)_m(M^2Oy)_n \qquad (2)$$

Herein $M^1$ is at least one element selected from among Al, B, In, Si, Ge, Sn, Ti, Mn, Zn, Y, Ga, Zr, Hf, Ta, La, Ce, Pr, Nd, Tb, Dy, Yb, and Fe. $M^2$ is at least one element selected from among Al, B, In, Si, Ge, Sn, Ti, Mn, Zn, Y, Ga, Zr, Hf, Ta, La, Ce, Pr, Nd, Tb, Dy, Yb, and Fe, provided that the element of $M^2$ is not identical with the element of $M^1$. Letters x and y are given as x = a/2 wherein a is the valence number of $M^1$, and y = b/2 wherein b is the valence number

of $M^2$. Letters m and n are real numbers meeting m+n = 1, 0 < m < 1 and 0 < n < 1. That is, the structure has a unit in which $M^1$ bonds with $M^2$ via oxygen. In the structure, $M^1$ and $M^2$ may be sparsely or locally distributed. The structure wherein $M^1$ and $M^2$ are sparsely distributed is as observed in a co-hydrolysate of two or more metal alkoxides. The structure wherein $M^1$ and $M^2$ are locally distributed is as observed in core/shell type particles (i.e. particles each consisting of a core of microparticulate metal oxide and a shell of another metal oxide enclosing the core) and is formed, for example, by hydrolysing a plurality of metal alkoxides in stages depending on the type of metal alkoxide.

The inventive dispersion is a dispersion in an organic solvent of core/shell type tetragonal titanium oxide solid-solution particles each consisting of a core of tetragonal titanium oxide having tin and manganese incorporated in solid solution (described just above) and a shell of silicon oxide around the core. In the absence of the silicon oxide shell, outstanding photocatalytic activity may be exerted or dispersibility be degraded. In the core/shell type tetragonal titanium oxide solid-solution particles each consisting of a core of tetragonal titanium oxide having tin and manganese incorporated in solid solution and a shell of silicon oxide around the core, the shell-forming silicon oxide accounts for 5 to 50%, preferably 10 to 40%, and more preferably 15 to 30% by weight of the titanium oxide solid-solution particles. A silicon oxide content of less than 5 wt% suggests insufficient shell formation whereas particles with a silicon oxide content in excess of 50 wt% are liable to agglomerate, rendering the dispersion opaque.

The silicon oxide shell is preferably formed by sol-gel reaction of a tetrafunctional silicon compound. Examples of the tetrafunctional silicon compound which can be used to this end include tetraalkoxysilanes such as tetramethoxysilane, tetraethoxysilane, tetra(n-propoxy)silane, tetra(i-propoxy)silane, and tetra(n-butoxy)silane; and (partial) hydrolytic condensates thereof, known as silicates or water glass. The sol-gel reaction may be conducted using a catalyst for promoting hydrolytic condensation of silicon compounds. The detail of sol-gel reaction will be described later in conjunction with the preparation method.

An appropriate proportion of the silicon oxide shell may be achieved by stoichiometric control of the amount of a tetrafunctional silicon compound used, or kinetic control in terms of reaction conditions and catalyst type. In the case of complete hydrolytic condensation, stoichiometric control is employed. The silicon oxide component constituting the shell may be determined (nature and amount) from a change of weight before and after reaction or by standard analysis such as $^{29}Si$ NMR spectroscopy.

The core/shell type tetragonal titanium oxide solid-solution particles should have a volume basis 50% cumulative distribution diameter $D_{50}$ of up to 50 nm, preferably 5 to 50 nm, more preferably 5 to 45 nm, and even more preferably 10 to 40 nm, as measured by the dynamic light scattering method using laser light.

Organic solvent dispersion of titanium oxide solid-solution particles

The inventive dispersion is a dispersion having 1 to 40%, especially 5 to 30% by weight of the core/shell type tetragonal titanium oxide solid-solution particles dispersed in an organic solvent. Examples of the organic solvent used herein include hydrocarbons of 5 to 30 carbon atoms such as pentane, hexane, heptane, octane, nonane, decane, undecane, dodecane, tridecane, tetradecane, pentadecane, hexadecane, heptadecane, octadecane, nonadecane, icosane, docosane, tricosane, tetracosane, pentacosane, hexacosane, heptacosane, octacosane, nonacosane, triacontane, benzene, toluene, o-xylene, m-xylene, p-xylene, and mixtures of two or more of the foregoing, known as petroleum ether, kerosene, ligroin, and nujol; mono- to polyhydric alcohols such as methanol, ethanol, 1-propanol, 2-propanol, cyclopentanol, diacetone alcohol, ethylene glycol, propylene glycol, β-thiadiglycol, butylene glycol, and glycerol; ethers such as diethyl ether, dipropyl ether, cyclopentyl methyl ether, ethylene glycol dimethyl ether, diethylene glycol dimethyl ether, triethylene glycol dimethyl ether, ethylene glycol monomethyl ether, ethylene glycol monoethyl ether, ethylene glycol monopropyl ether, ethylene glycol monobutyl ether, propylene glycol monomethyl ether, propylene glycol monoethyl ether, propylene glycol monopropyl ether, propylene glycol monobutyl ether, butylene glycol monomethyl ether, butylene glycol monoethyl ether, butylene glycol monopropyl ether, and butylene glycol monobutyl ether; esters such as methyl formate, ethyl formate, propyl formate, butyl formate, methyl acetate, ethyl acetate, propyl acetate, butyl acetate, methyl propionate, ethyl propionate, propyl propionate, butyl propionate, methyl butyrate, ethyl butyrate, propyl butyrate, butyl butyrate, methyl benzoate, ethyl benzoate, propyl benzoate, butyl benzoate, dimethyl oxalate, diethyl oxalate, dipropyl oxalate, dibutyl oxalate, dimethyl malonate, diethyl malonate, dipropyl malonate, dibutyl malonate, ethylene glycol diformate, ethylene glycol diacetate, ethylene glycol dipropionate, ethylene glycol dibutyrate, propylene glycol diacetate, propylene glycol dipropionate, propylene glycol dibutyrate, ethylene glycol methyl ether acetate, propylene glycol methyl ether acetate, butylene glycol monomethyl ether acetate, ethylene glycol ethyl ether acetate, propylene glycol ethyl ether acetate, and butylene glycol monoethyl ether acetate; ketones such as acetone, diacetone alcohol, diethyl ketone, methyl ethyl ketone, methyl isobutyl ketone, methyl n-butyl ketone, dibutyl ketone, cyclopentanone, cyclohexanone, cycloheptanone, and cyclooctanone; amides such as dimethylformamide, dimethylacetamide, tetraacetylethylenediamide, tetraacetylhexamethylenetetramide, and N,N-dimethylhexamethylenediamine diacetate. Of these, the organic solvent is preferably selected from among methanol, ethanol, 1-propanol (IPA), butanol, diacetone alcohol (DAA), propylene glycol monomethyl ether (PGM), propylene glycol monomethyl ether acetate (PGMAc), and

mixtures thereof.

The organic solvent dispersion of titanium oxide solid-solution particles according to the invention further comprises hydrolysable organosilicon compound and/or (partial) hydrolytic condensate thereof. The compound is of the general formula (1) below. The organosilicon compound or (partial) hydrolytic condensate thereof is present in an amount of 5 to 50 parts, more preferably up to 40 parts, and even more preferably up to 30 parts by weight based on 100 parts by weight of the core/shell type tetragonal titanium oxide solid-solution particles while it may be merely added to or complexed with the particles via reaction. The organosilicon component may be determined from a change of weight before and after reaction or by standard analysis such as $^{29}$Si NMR spectroscopy. In particular, liquid $^{29}$Si NMR spectroscopy is preferred because the shell-forming silicon oxide component can be qualitatively and quantitatively determined at the same time.

$$R^1_pR^2_qR^3_rSi(OR^4)_{4-p-q-r} \qquad (1)$$

Herein $R^1$ is hydrogen, a substituted or unsubstituted, monovalent hydrocarbon group of 1 to 20 carbon atoms (wherein a plurality of substituent groups may bond together), or a diorganosiloxy group of up to 50 silicon atoms, preferably hydrogen, a $C_1$-$C_{20}$ alkyl group, a $C_2$-$C_{20}$ alkenyl group, a $C_6$-$C_{20}$ aryl group, a $C_1$-$C_{20}$ alkyl group having (meth)acrylic, (meth)acryloxy, epoxy, halogen, mercapto, amino, aminoalkylamino or isocyanate substituted thereon, an isocyanurate group composed of two or more isocyanate-substituted hydrocarbon groups whose isocyanate groups are bonded together, or a (poly)dimethylsiloxy group of up to 50 silicon atoms. $R^2$, $R^3$ and $R^4$ are each independently an alkyl group of 1 to 6 carbon atoms, p is an integer of 1 to 3, q is 0, 1 or 2, r is 0, 1 or 2, and the sum p+q+r is an integer of 1 to 3.

Examples of the silane compound having formula (1) wherein p=1 and q=r=0 include hydrogentrimethoxysilane, hydrogentriethoxysilane, methyltrimethoxysilane, methyltriethoxysilane, methyltriisopropoxysilane, ethyltrimethoxysilane, ethyltriethoxysilane, ethyltriisopropoxysilane, propyltrimethoxysilane, propyltriethoxysilane, propyltriisopropoxysilane, phenyltrimethoxysilane, vinyltrimethoxysilane, allyltrimethoxysilane, γ-methacryloxypropyltrimethoxysilane, γ-methacryloxypropyltriethoxysilane, γ-acryloxypropyltrimethoxysilane, γ-glycidoxypropyltrimethoxysilane, γ-glycidoxypropyltriethoxysilane, β-(3,4-epoxycyclohexyl)ethyltrimethoxysilane, γ-chloropropyltrimethoxysilane, 3,3,3-trifluoropropyltrimethoxysilane, 3,3,3-trifluoropropyltriethoxysilane, perfluorooctylethyltrimethoxysilane, γ-mercaptopropyltrimethoxysilane, γ-aminopropyltrimethoxysilane, γ-aminopropyltriethoxysilane, N-(2-aminoethyl)aminopropyltrimethoxysilane, γ-isocyanatopropyltrimethoxysilane, γ-isocyanatopropyltriethoxysilane, tris(3-trimethoxysilylpropyl)isocyanurate and tris(3-triethoxysilylpropyl)isocyanurate having isocyanate groups bonded together, partial hydrolytic condensates of methyltrimethoxysilane (commercially available as KC-89S and X-40-9220 from Shin-Etsu Chemical Co., Ltd.), and partial hydrolytic condensates of methyltrimethoxysilane and γ-glycidoxypropyltrimethoxysilane (commercially available as X-41-1056 from Shin-Etsu Chemical Co., Ltd.)

Examples of the silane compound having formula (1) wherein p=1 and q=r=0 and $R^1$ is polydimethylsiloxane include compounds having the general formula (3).

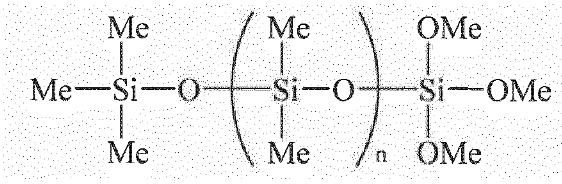

(3)

In formula (3), preferably n is an integer of 0 to 50, more preferably an integer of 5 to 40, and even more preferably an integer of 10 to 30. If n exceeds 50, the compound has more silicone oil properties, with the solubility of surface-treated organosol in various resins being limited. A compound having the average structure of formula (3) wherein n=30 is commercially available as X-24-9822 from Shin-Etsu Chemical Co., Ltd.

Examples of the silane compound having formula (1) wherein p=1, q=1 and r=0 include methylhydrogendimethoxysilane, methylhydrogendiethoxysilane, dimethyldimethoxysilane, dimethyldiethoxysilane, methylethyldimethoxysilane, diethyldimethoxysilane, diethyldiethoxysilane, methylpropyldimethoxysilane, methylpropyldiethoxysilane, diisopropyldimethoxysilane, phenylmethyldimethoxysilane, vinylmethyldimethoxysilane, γ-glycidoxypropylmethyldimethoxysilane, γ-glycidoxypropylmethyldiethoxysilane, P-(3,4-epoxycyclohexyl)ethylmethyldimethoxysilane, γ-methacryloxypropylmethyldimethoxysilane, γ-methacryloxypropylmethyldiethoxysilane, γ-mercaptopropylmethyldimethoxysilane, γ-aminopropylmethyldiethoxysilane, and N-(2-aminoethyl)aminopropylmethyldimethoxysilane.

Examples of the silane compound having formula (1) wherein p=1, q=1 and r=1 include trimethylmethoxysilane, trimethylethoxysilane, triethylmethoxysilane, n-propyldimethylmethoxysilane, n-propyldiethylmethoxysilane, isopropyldimethylmethoxysilane, isopropyldiethylmethoxysilane, propyldimethylethoxysilane, n-butyldimethylmethoxysilane, n-butyldimethylethoxysilane, n-hexyldimethylmethoxysilane, n-hexyldimethylethoxysilane, n-pentyldimethylmethoxysilane, n-pentyldimethylethoxysilane, n-hexyldimethylmethoxysilane, n-hexyldimethylethoxysilane, n-decyldimethylmethoxysilane, and n-decyldimethylethoxysilane.

More preferably, on analysis of the organic solvent dispersion of titanium oxide solid-solution particles by $^{29}Si$ nuclear magnetic resonance (NMR) spectroscopy, peaks are detected in both the regions of -40 to -70 ppm and -80 to -130 ppm. The NMR spectroscopy may be applied to either solid or liquid. In the case of solid NMR spectroscopy, since a measurement sample must be evaporated to dryness as pre-treatment, the results do not necessarily reflect the bond states of silicon in the sample. Accordingly it is preferred to monitor by NMR spectroscopy in the liquid state. In liquid $^{29}Si$ NMR spectroscopy, analysis is preferably made using a test tube and probe both made of silicon-free material. Exemplary of the silicon-free material which can be used in the NMR spectroscopy is polytetrafluoroethylene, typically Teflon®. In the liquid $^{29}Si$ NMR spectroscopy, an appropriate relaxation agent may be used for reducing the measurement time. As the relaxation agent, well-known reagents may be used (see, for example, Organometallics, Volume 27, Issue 4, pp500-502 (2008), and the references therein). In particular, preference is given to tris(acetylacetonato)chromium (III) complex since it is fully soluble in water and organic solvents and does not cause agglomeration of titanium oxide. For example, when several droplets of a solution of tris(acetylacetonato)chromium (III) complex in hexadeuterioacetone (acetone-$d_6$) in a concentration of about 1 mol/$dm^3$ are used as the relaxation agent, desirably both the relaxation effect and deuterium lock effect are available. Likewise, the surface state of titanium oxide after composition formulation may be examined by NMR spectroscopy.

On analysis by $^{29}Si$ NMR spectroscopy, a change of the condensation state of functionality of a silicon compound can be examined. Functionality may be discriminated between trifunctional T unit and tetrafunctional Q unit. That is, T unit is one of components derived from the organosilicon compound of formula (1) whereas Q unit is detected as being derived from the silicon oxide component that forms the shell of the core/shell type titanium oxide particles. A change of the condensation state is determined by examining the proportion of (T0) to (T3) and (Q0) to (Q4), shown below. The condensation degree is each independently in the order of T3 > T2 > T1 > T0 and Q4 > Q3 > Q2 > Q1 > Q0, and in most cases, the detection magnetic field becomes on higher magnetic field side in the order of Q4 > Q3 > Q2 > Q1 > Q0 > T3 > T2 > T1 > T0. A proportion of functionality and condensation state may be estimated from signal intensity. At this point, since $^{29}Si$ nucleus has a negative gyromagnetic ratio ($\gamma_B$), the nuclear Overhauser effect (NOE) becomes inversed, suppressing the nuclear magnetic relaxation prevailing around resonance nucleus. Therefore, measurement conditions are preferably selected such that the negative NOE may not become significant. In the case of pulse Fourier-transform NMR, this problem can be solved using an adequate pulse sequence. For example, an off-resonance pulse sequence is preferably used.

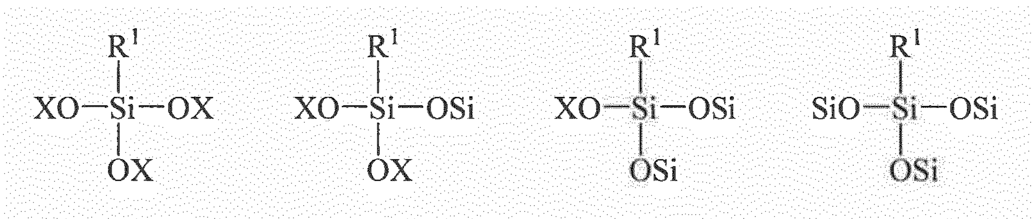

(T0) (T1) (T2) (T3)

Herein $R^1$ is as defined above, and X is hydrogen or $C_1$-$C_4$ alkyl.

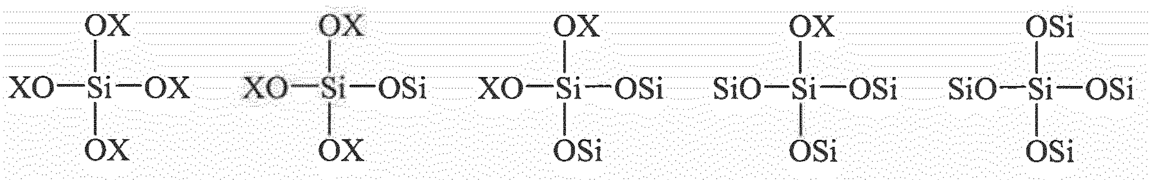

(Q0) (Q1) (Q2) (Q3) (Q4)

Herein X is hydrogen or $C_1$-$C_4$ alkyl.

The notation of resonance magnetic field may be given by expressing in parts per million (ppm) a difference from the resonance magnetic field based on the resonance of $^{29}Si$ nucleus of tetramethylsilane. According to this notation rule, most often T0 is detectable in the range of -40 to -46 ppm, preferably -42 to -45 ppm, T1 in the range of -46 to -54

ppm, preferably -48 to -52 ppm, T2 in the range of -54 to -60 ppm, preferably -56 to -58 ppm, and T3 in the range of -60 to -70 ppm, preferably -62 to -68 ppm. Q0 is detectable in the range of -80 to -90 ppm, preferably -85 to -90 ppm, Q1 in the range of -90 to -110 ppm, preferably -95 to -105 ppm, Q2 in the range of -100 to -115 ppm, Q3 in the range of -100 to -115 ppm, preferably -105 to -115 ppm, and Q4 in the range of -110 to -130 ppm, preferably -110 to -120 ppm. The discrimination of the condensation state between T and Q is preferably accomplished by examining the spin coupling of $^{1}H$ nucleus and $^{29}Si$ nucleus. The negative value in the notation indicates that the resonance magnetic field has a difference on a higher magnetic field side than the reference line. The width of the reference line depends on the strength of the magnetic field of the NMR instrument used in measurement. The aforementioned preferred range of resonance line is the value obtained from an example where a magnetic field of 11.75 Tesla (T) is applied. The magnetic field which can be used in the NMR instrument is in a range of 5 to 20 T, preferably 8 to 15 T, and more preferably 10 to 13 T. If the magnetic field is less than 5 T, measurement may be difficult because the S/N ratio becomes lower. If the magnetic field exceeds 20 T, measurement may be difficult because the resonance instrument becomes large sized. As a matter of course, the skilled artisan will analogize the strength of magnetic field, the width of resonance line, and the intensity of signals from the information set forth above.

The organic solvent dispersion of core/shell type titanium oxide solid-solution particles preferably has a solids concentration of 0.1 to 30%, more preferably 0.5 to 25%, even more preferably 3 to 20% by weight of solids inclusive of the component derived from the organosilicon compound of formula (1). If the solids concentration is less than 0.1 wt%, undesirably a more amount of dispersing medium is necessary until the effective level is reached when added to a coating composition. If the solids concentration exceeds 30 wt%, the dispersion may gel and lose flow. A dilute dispersion having a solids concentration of around 1 wt% may be used as a thinner for a coating resin. A thick dispersion having a solids concentration of around 20 wt% (designated Agent A) may be added in a suitable amount to an existing coating composition (designated Agent B) to form a mixture of Agents A/B, i.e. two-part type coating composition. It is a choice for a particular situation whether the dispersion is used as thinner or two-part type coating composition. For example, the two-part type application is recommended if the titanium oxide particle component can adversely affect the shelf life of a coating composition. When a coating composition is prepared from a prior art water dispersion, such two-part type application is difficult. In this sense, the organic solvent dispersion of the invention offers wider choices for the utilization of coating compositions.

Coating composition comprising organic solvent dispersion of titanium oxide solid-solution particles

The organic solvent dispersion of core/shell type tetragonal titanium oxide solid-solution particles (designated Agent A) may be used as an additive to a coating composition (designated Agent B). Examples of the coating composition (Agent B) include silicone, acrylic silicone, acrylic, melamine, urethane, acrylic urethane, epoxy, paraffin and alkyd base compositions. Application of Agent A to silicone base coating compositions is especially preferred for good compatibility and dispersibility. Preferably Agent A is added to Agent B so as to provide a solids ratio of 1 to 70%, more preferably 4 to 60%, and even more preferably 6 to 50% by weight, calculated as the solids weight of Agent A divided by the solids weight of Agent B. If the solids ratio (Agent A/B) is less than 1 wt%, the addition effect of Agent A may be insufficient. If the solids ratio exceeds 70 wt%, film physical properties may be adversely affected. A coating composition having a solids ratio (Agent A/B) of about 1 to 20 wt% may find use as weather resistant coating. A coating composition having a solids ratio (Agent A/B) of about 20 to 70 wt% may find use as high refractive index coating for eyeglass lenses or the like. The solids ratio (Agent A/B) may be adjusted as appropriate for a particular purpose. The solids weight refers to the weight of residues left after removal of solvent and other volatile components. The solids weight of Agent A or B may be determined from a change of weight when a sample is evaporated to dryness. Below, the silicone base coating composition as a typical example of Agent B is described in detail.

Silicone base coating composition

The silicone base coating composition used herein is a composition comprising (I) a silicone resin obtained from (co)hydrolytic condensation of at least one alkoxysilane or partial hydrolytic condensate thereof, (II) a curing catalyst, (III) a solvent, and (IV) colloidal silica.

Component (I)

Component (I) is a silicone resin obtained from (co)hydrolytic condensation of at least one member selected from an alkoxysilane having the general formula (4), an alkoxysilane having the general formula (5), and partial hydrolytic condensates thereof.

$$(R^{01})_m(R^{02})_nSi(OR^{03})_{4-m-n} \qquad (4)$$

Herein $R^{01}$ and $R^{02}$ are each independently hydrogen or a substituted or unsubstituted monovalent hydrocarbon group in which substituent groups may bond together, $R^{03}$ is $C_1$-$C_3$ alkyl, m and n are independently 0 or 1, and m+n is 0, 1 or 2.

$$Y[Si(R^{04})_m(R^{05})_n(OR^{06})_{3-m-n}]_2 \qquad (5)$$

Herein Y is a divalent organic group selected from $C_1$-$C_{10}$ alkylene, $C_1$-$C_{10}$ perfluoroalkylene, $C_1$-$C_{10}$ di(ethylene)perfluoroalkylene, phenylene, and biphenylene, $R^{04}$ and $R^{05}$ are each independently hydrogen or a substituted or unsubstituted monovalent hydrocarbon group in which substituent groups may bond together, $R^{06}$ is $C_1$-$C_3$ alkyl, m and n are independently 0 or 1, and m+n is 0, 1 or 2.

In formula (4), $R^{01}$ and $R^{02}$ are each independently selected from hydrogen and substituted or unsubstituted monovalent hydrocarbon groups, preferably of 1 to 12 carbon atoms, more preferably 1 to 8 carbon atoms, for example, hydrogen; alkyl groups such as methyl, ethyl, propyl, butyl, pentyl, hexyl, heptyl and octyl; cycloalkyl groups such as cyclopentyl and cyclohexyl; alkenyl groups such as vinyl and allyl; aryl groups such as phenyl; halo-substituted hydrocarbon groups such as chloromethyl, γ-chloropropyl, and 3,3',3"-trifluoropropyl; and (meth)acryloxy, epoxy, mercapto, amino, aminoalkylamino or isocyanato-substituted hydrocarbon groups such as γ-methacryloxypropyl, γ-glycidoxypropyl, 3,4-epoxycyclohexylethyl, γ-mercaptopropyl, γ-aminopropyl, and γ-isocyanatopropyl. An isocyanurate group having a plurality of isocyanato-substituted hydrocarbon groups bonded together is also exemplary. Of these, alkyl groups are preferred for the application where mar resistance and weatherability are required, and epoxy, (meth)acryloxy and isocyanurate-substituted hydrocarbon groups are preferred where toughness and dyeability are required.

$R^{03}$ is selected from $C_1$-$C_3$ alkyl groups, for example, methyl, ethyl, n-propyl, and isopropyl. Of these, methyl and ethyl are preferred because the alkoxysilane is highly reactive in hydrolytic condensation and the alcohol $R^{03}OH$ formed can be readily distilled off due to a high vapor pressure.

The alkoxysilane of formula (4) wherein m=0 and n=0 is (a-1) a tetraalkoxysilane of the formula: $Si(OR^{03})_4$ or a partial hydrolytic condensate thereof. Examples of suitable tetraalkoxysilane and partial hydrolytic condensate thereof include tetramethoxysilane, tetraethoxysilane, tetraisopropoxysilane, tetrabutoxysilane; partial hydrolytic condensates of tetramethoxysilane, which are commercially available under the trade name of M Silicate 51 from Tama Chemicals Co., Ltd., MSI51 from Colcoat Co., Ltd., and MS51 and MS56 from Mitsubishi Chemical Co., Ltd.; partial hydrolytic condensates of tetraethoxysilane, which are commercially available under the trade name of Silicate 35 and Silicate 45 from Tama Chemicals Co., Ltd., ESI40 and ESI48 from Colcoat Co., Ltd.; and partial co-hydrolytic condensates of tetramethoxysilane and tetraethoxysilane, which are commercially available under the trade name of FR-3 from Tama Chemicals Co., Ltd. and EMSi48 from Colcoat Co., Ltd.

The alkoxysilane of formula (4) wherein m=1 and n=0 or m=0 and n=1 is (a-2) a trialkoxysilane of the formula: $R^{01}Si(OR^{03})_3$ or $R^{02}Si(OR^{03})_3$ or a partial hydrolytic condensate thereof. Examples of suitable trialkoxysilane and partial hydrolytic condensate thereof include hydrogentrimethoxysilane, hydrogentriethoxysilane, methyltrimethoxysilane, methyltriethoxysilane, methyltriisopropoxysilane, ethyltrimethoxysilane, ethyltriethoxysilane, ethyltriisopropoxysilane, propyltrimethoxysilane, propyltriethoxysilane, propyltriisopropoxysilane, phenyltrimethoxysilane, vinyltrimethoxysilane, allyltrimethoxysilane, γ-methacryloxypropyltrimethoxysilane, γ-methacryloxypropyltriethoxysilane, γ-acryloxypropyltrimethoxysilane, γ-glycidoxypropyltrimethoxysilane, γ-glycidoxypropyltriethoxysilane, β-(3,4-epoxycyclohexyl)ethyltrimethoxysilane, γ-chloropropyltrimethoxysilane, 3,3,3-trifluoropropyltrimethoxysilane, 3,3,3-trifluoropropyltriethoxysilane, perfluorooctylethyltrimethoxysilane, γ-mercaptopropyltrimethoxysilane, γ-aminopropyltrimethoxysilane, γ-aminopropyltriethoxysilane, N-(2-aminoethyl)aminopropyltrimethoxysilane, γ-isocyanatopropyltrimethoxysilane, γ-isocyanatopropyltriethoxysilane, tris(3-trimethoxysilylpropyl)isocyanurate and tris(3-triethoxysilylpropyl)isocyanurate in which isocyanate groups are bonded together; and

partial hydrolytic condensates of methyltrimethoxysilane, which are commercially available as KC-89S and X-40-9220 from Shin-Etsu Chemical Co., Ltd.; and

partial hydrolytic condensates of methyltrimethoxysilane and γ-glycidoxypropyltrimethoxysilane, which are commercially available as X-41-1056 from Shin-Etsu Chemical Co., Ltd.

The alkoxysilane of formula (4) wherein m=1 and n=1 is (a-3) a dialkoxysilane of the formula: $(R^{01})(R^{02})Si(OR^{03})_2$ or a partial hydrolytic condensate thereof. Examples of suitable dialkoxysilane and partial hydrolytic condensate thereof include methylhydrogendimethoxysilane, methylhydrogendiethoxysilane, dimethyldimethoxysilane, dimethyldiethoxysilane, methylethyldimethoxysilane, diethyldimethoxysilane, diethyldiethoxysilane, methylpropyldimethoxysilane, methylpropyldiethoxysilane, diisopropyldimethoxysilane, phenylmethyldimethoxysilane, vinylmethyldimethoxysilane, γ-glycidoxypropylmethyldimethoxysilane, γ-glycidoxypropylmethyldiethoxysilane, β-(3,4-epoxycyclohexyl)ethylmethyldimethoxysilane, γ-methacryloxypropylmethyldimethoxysilane, γ-methacryloxypropylmethyldiethoxysilane, γ-mercaptopropylmethyldimethoxysilane, γ-aminopropylmethyldiethoxysilane, and N-(2-aminoethyl)aminopropylmethyldimethoxysilane.

In formula (5), $R^{04}$ and $R^{05}$ are each independently selected from hydrogen and substituted or unsubstituted monovalent hydrocarbon groups, preferably of 1 to 12 carbon atoms, more preferably 1 to 8 carbon atoms, for example,

hydrogen; alkyl groups such as methyl, ethyl, propyl, butyl, pentyl, hexyl, heptyl and octyl; cycloalkyl groups such as cyclopentyl and cyclohexyl; alkenyl groups such as vinyl and allyl; aryl groups such as phenyl; halo-substituted hydrocarbon groups such as chloromethyl, γ-chloropropyl, and 3,3',3"-trifluoropropyl; and (meth)acryloxy, epoxy, mercapto, amino or isocyanato-substituted hydrocarbon groups such as γ-methacryloxypropyl, γ-glycidoxypropyl, 3,4-epoxycyclohexylethyl, γ-mercaptopropyl, γ-aminopropyl, and γ-isocyanatopropyl. An isocyanurate group having a plurality of isocyanato-substituted hydrocarbon groups bonded together is also exemplary. Of these, alkyl groups are preferred for the application where mar resistance and weatherability are required, and epoxy, (meth)acryloxy and isocyanurate-substituted hydrocarbon groups are preferred where toughness and dyeability are required.

$R^{06}$ is selected from $C_1$-$C_3$ alkyl groups, for example, methyl, ethyl, n-propyl, and isopropyl. Of these, methyl and ethyl are preferred because the alkoxysilane is highly reactive in hydrolytic condensation and the alcohol $R^{06}OH$ formed can be readily distilled off due to a high vapor pressure.

The compound of formula (5) wherein m=0 and n=0 is (a-4) a compound of the formula: $Y[Si(OR^{06})_3]_2$ or a partial hydrolytic condensate thereof, examples of which include ω-bis(trialkoxysilyl)alkane, ω-bis(trialkoxysilyl)perfluoroalkane, ω-bis(trialkoxysilyl)(partially fluorinated alkane), o-, m- or p-bis(trialkoxysilyl)benzene, and bis(trialkoxysilyl)biphenyl.

Y is a divalent organic group selected from $C_1$-$C_{10}$ alkylene, $C_1$-$C_{10}$ perfluoroalkylene, $C_1$-$C_{10}$ di(ethylene)perfluoroalkylene, phenylene, and biphenylene. Preferably, Y is a partially fluorinated alkylene group. From the synthesis aspect, ω-diethylene(perfluoroalkylene) groups are readily available. Exemplary are those compounds of formula (5) wherein Y is ω-bisethylene[tetrakis(difluoromethylene)] and $R^{06}$ is methyl.

The silicone resin as component (I) may be prepared using one or more of the foregoing components (a-1), (a-2), (a-3) and (a-4) in any desired proportion. For the purpose of improving storage stability, mar resistance and crack resistance, it is preferred to use 0 to 50 Si-mol% of component (a-1), 50 to 100 Si-mol% of component (a-2) and 0 to 10 Si-mol% of component (a-3), based on the total amount of components (a-1), (a-2), (a-3) and (a-4) which is equal to 100 Si-mol%. It is more preferred to use 0 to 30 Si-mol% of component (a-1), 70 to 100 Si-mol% of component (a-2), 0 to 10 Si-mol% of component (a-3), and 0 to 5 Si-mol% of component (a-4). If the main component (a-2) is less than 50 Si-mol%, the resin may have a lower crosslinking density and less curability, tending to form a cured film with a lower hardness. If component (a-1) is in excess of 50 Si-mol%, the resin may have a higher crosslinking density and a lower toughness to permit crack formation. Using component (a-4) in a small amount of up to 5 Si-mol% makes it possible to alter surface properties, for example, to control contact angle with water, to impart mar resistance, and to improve pencil hardness.

It is noted that Si-mol% is a percentage based on the total Si moles, and the Si mole means that in the case of a monomer, its molecular weight is 1 mole, and in the case of a dimer, its average molecular weight divided by 2 is 1 mole.

The silicone resin as component (I) may be prepared through (co)hydrolytic condensation of one or more of components (a-1), (a-2), (a-3), and (a-4) by a well-known method. For example, an alkoxysilane (a-1), (a-2), (a-3) or (a-4) or partial hydrolytic condensate thereof or a mixture thereof is (co)hydrolysed in water at pH 1 to 7.5, preferably pH 2 to 7. At this point, metal oxide particles dispersed in water such as silica sol may be used. A catalyst may be added to the system for adjusting its pH to the described range and to promote hydrolysis. Suitable catalysts include organic acids and inorganic acids such as hydrogen fluoride, hydrochloric acid, nitric acid, formic acid, acetic acid, propionic acid, oxalic acid, citric acid, maleic acid, benzoic acid, malonic acid, glutaric acid, glycolic acid, methanesulfonic acid, and toluenesulfonic acid, solid acid catalysts such as cation exchange resins having carboxylic or sulfonic acid groups on the surface, and water-dispersed metal oxide particles such as acidic water-dispersed silica sol. Alternatively, a dispersion of metal oxide particles in water or organic solvent such as silica sol may be co-present upon hydrolysis.

In this hydrolysis, water may be used in an amount of 20 to 3,000 parts by weight per 100 parts by weight of the total of alkoxysilanes (a-1), (a-2), (a-3) and (a-4) and partial hydrolytic condensates thereof. An excess of water may lower system efficiency and in a final coating composition, residual water can adversely affect coating operation and drying. Water is preferably used in an amount of 50 parts by weight to less than 150 parts by weight for the purpose of improving storage stability, mar resistance, and crack resistance. With a smaller amount of water, the silicone resin may fail to reach a weight average molecular weight (Mw) in the optimum range, as measured by GPC versus polystyrene standards. With an excess of water, the content in the silicone resin of units $R'SiO_{3/2}$ in units $R'SiO_{(3-p)/2}(OX)_p$ derived from component (a-2) may fail to reach the optimum range to maintain a coating crack resistant wherein R' is $R^{01}$ or $R^{02}$; X is hydrogen or $R^{03}$; $R^{01}$, $R^{02}$, and $R^{03}$ are as defined above, and p is an integer of 0 to 3.

Hydrolysis may be effected by adding dropwise or pouring water to the alkoxysilane or partial hydrolytic condensate, or inversely by adding dropwise or pouring the alkoxysilane or partial hydrolytic condensate to water. The reaction system may contain an organic solvent. However, the absence of organic solvent is preferred because there is a tendency that as the reaction system contains more organic solvent, the resulting silicone resin has a lower Mw as measured by GPC versus polystyrene standards.

To produce the silicone resin (I), the hydrolysis must be followed by condensation. Condensation may be effected continuous to the hydrolysis while maintaining the liquid temperature at room temperature or heating at a

temperature of not higher than 100°C. A temperature higher than 100°C may cause gelation. Condensation may be promoted by distilling off the alcohol formed by hydrolysis at a temperature of at least 80°C and atmospheric or subatmospheric pressure. Also for the purpose of promoting condensation, condensation catalysts such as basic compounds, acidic compounds or metal chelates may be added. Prior to or during the condensation step, an organic solvent may be added for the purpose of adjusting the progress of condensation or the concentration. Alternatively, a dispersion of metal oxide particles in water or organic solvent such as silica sol or the inventive Agent A (i.e. organic solvent dispersion of titanium oxide solid-solution particles) may be added. For the reason that a silicone resin generally builds up its molecular weight and reduces its solubility in water or alcohol formed as condensation proceeds, the organic solvent added herein should preferably be one having a boiling point of at least 80°C and a relatively highly polarity in which the silicone resin is fully dissolvable. Examples of the organic solvent include alcohols such as isopropyl alcohol, n-butanol, isobutanol, tert-butanol, and diacetone alcohol; ketones such as methyl propyl ketone, diethyl ketone, methyl isobutyl ketone, cyclohexanone, and diacetone alcohol; ethers such as dipropyl ether, dibutyl ether, anisole, dioxane, ethylene glycol monoethyl ether, ethylene glycol monobutyl ether, propylene glycol monomethyl ether, and propylene glycol monomethyl ether acetate (PGMEA); and esters such as propyl acetate, butyl acetate, and cyclohexyl acetate. The organic solvent may be used in an amount sufficient to dissolve the silicone resin, typically 100 to 1,000% by weight based on the solids of the silicone resin. With less than 100 wt% of the organic solvent, the coating composition may become of poor quality because of a possibility of phase separation during low-temperature storage. With more than 1,000 wt% of the organic solvent, the concentration of the resin as active ingredient of the coating composition may become too thin to form a satisfactory coating.

The silicone resin resulting from condensation should preferably have a weight average molecular weight (Mw) of at least 1,500, more preferably 1,500 to 50,000, and even more preferably 2,000 to 20,000, as measured by GPC versus polystyrene standards. With a Mw below the range, a coating tends to be less tough and prone to cracking. On the other hand, a silicone resin with too high a Mw tends to have a low hardness and the resin in a coating undergoes phase separation, incurring film whitening.

It is noted that when a silicone resin as component (I) is obtained from (co)hydrolytic condensation of an alkoxysilane(s) and/or partial hydrolytic condensate(s) as mentioned above, the inventive Agent A (i.e. organic solvent dispersion of titanium oxide solid-solution particles) may be added to the alkoxysilane(s) and/or partial hydrolytic condensate(s) prior to the (co)hydrolytic condensation. Also, when colloidal silica is used as component (IV) to be described later, this colloidal silica may be added to the (co)hydrolytic condensation system.

If necessary, the condensation may be followed by concentration and/or solvent replacement. Concentration may be conducted by any standard techniques such as distillation, reverse osmosis, freeze drying and vacuum drying.

Solvent replacement may be achieved by adding another solvent and effecting azeotropic distillation, reverse osmosis or ultrafiltration. Examples of the other solvent include alcohols such as methanol, ethanol, isopropanol, n-butanol, isobutanol, stearyl alcohol, oleyl alcohol, and lauryl alcohol, aromatic hydrocarbons such as toluene and xylene, esters such as ethyl acetate and butyl acetate, ketones such as methyl ethyl ketone and methyl isobutyl ketone, glycol ethers such as ethyl cellosolve and propylene glycol monomethyl ether, saturated hydrocarbons such as n-hexane, and mixtures thereof.

The silicone resin may be adjusted at pH 3 to 7. A pH adjustor used to this end may be either an acidic or basic compound. Suitable inorganic and organic acids include hydrogen fluoride, hydrochloric acid, nitric acid, formic acid, acetic acid, propionic acid, oxalic acid, citric acid, maleic acid, benzoic acid, malonic acid, glutaric acid, glycolic acid, methanesulfonic acid, and toluenesulfonic acid.

Component (II)

Component (II) is a curing catalyst which serves to promote condensation reaction of condensable groups such as silanol and alkoxy groups in silicone resin (I). Suitable catalysts include basic compounds such as lithium hydroxide, sodium hydroxide, potassium hydroxide, sodium methylate, sodium propionate, potassium propionate, sodium acetate, potassium acetate, sodium formate, potassium formate, trimethylbenzylammonium hydroxide, tetramethylammonium hydroxide (TMAH), tetramethylammonium acetate, n-hexylamine, tributylamine, diazabicycloundecene (DBU), and dicyandiamide; metal-containing compounds such as tetraisopropyl titanate, tetrabutyl titanate, acetylacetonatotitanium, aluminum triisobutoxide, aluminum triisopropoxide, tris(acetylacetonato)aluminum, aluminum diisopropoxy(ethyl acetoacetate), aluminum perchlorate, aluminum chloride, cobalt octylate, (acetylacetonato)cobalt, (acetylacetonato)iron, (acetylacetonato)tin, dibutyltin octylate, and dibutyltin laurate; and acidic compounds such as p-toluenesulfonic acid and trichloroacetic acid. Of these, preference is given to sodium propionate, sodium acetate, sodium formate, trimethylbenzylammonium hydroxide, tetramethylammonium hydroxide, tris(acetylacetonato)aluminum, and aluminum diisopropoxy(ethyl acetoacetate).

Another useful curing catalyst is an aromatic-free compound having the general formula (6). The silicone coating composition loaded with this catalyst becomes shelf stable while remaining curable and crack resistant.

$$[(R^{07})(R^{08})(R^{09})(R^{10})M]^{+}\cdot X^{-} \quad (6)$$

Herein $R^{07}$, $R^{08}$, $R^{09}$ and $R^{10}$ are each independently a $C_1$-$C_{18}$ alkyl group which may be substituted with halogen, each of $R^{07}$, $R^{08}$, $R^{09}$ and $R^{10}$ has a Taft-Dubois steric substituent constant Es, the total of constants Es of $R^{07}$, $R^{08}$, $R^{09}$ and $R^{10}$ is up to -0.5, M is an ammonium or phosphonium cation, and $X^-$ is a halide anion, hydroxide anion or $C_1$-$C_4$ carboxylate anion.

Taft-Dubois steric substituent constant Es is a rate of esterification reaction of a substituted carboxylic acid under acidic conditions relative to methyl group $CH_3$ and represented by the equation:

$$Es = \log(k/k0)$$

wherein k is a rate of acidic esterification reaction of a substituted carboxylic acid under specific conditions and k0 is a rate of acidic esterification reaction of methyl-substituted carboxylic acid under the same conditions. See J. Org. Chem., 45, 1164 (1980) and J. Org. Chem., 64, 7707 (1999).

In general, Taft-Dubois steric substituent constant Es is an index representing the steric bulkiness of a substituent. For example, the value of constant Es is 0.00 for methyl, -0.08 for ethyl, -0.31 for n-propyl, and -0.31 for n-butyl, indicating that the lower (or more negative) the Es, the more sterically bulky is the substituent.

In formula (6), the total of constants Es of $R^{07}$, $R^{08}$, $R^{09}$ and $R^{10}$ should preferably be equal to or more negative than -0.5. If the total of constants Es is above -0.5, a coating composition may become low in shelf stability and form a coat which can be cracked or whitened in a water-resistant test and loses adhesion, especially water-resistant adhesion and boiling adhesion. In the event the total of constants Es is above -0.5, for example, $R^{07}$, $R^{08}$, $R^{09}$ and $R^{10}$ are all methyl, a corresponding catalyst of formula (6) becomes higher in catalytic activity, but a coating composition comprising the same tends to lose shelf stability and a coat thereof becomes so hygroscopic as to develop defects in a water-resistant test. The total of constants Es of $R^{07}$, $R^{08}$, $R^{09}$ and $R^{10}$ is preferably not lower than -3.2, and more preferably not lower than -2.8.

In formula (6), $R^{07}$, $R^{08}$, $R^{09}$ and $R^{10}$ are alkyl groups of 1 to 18 carbon atoms, preferably 1 to 12 carbon atoms, which may be substituted with halogen, for example, alkyl groups such as methyl, ethyl, propyl, butyl, pentyl, hexyl, heptyl, and octyl; cycloalkyl groups such as cyclopentyl and cyclohexyl; and halo-alkyl groups such as chloromethyl, γ-chloropropyl and 3,3,3-trifluoropropyl.

M is an ammonium or phosphonium cation. $X^-$ is a halide anion, hydroxide anion or $C_1$-$C_4$ carboxylate anion, and preferably a hydroxide anion or acetate anion.

Illustrative examples of the curing catalyst having formula (6) include, but are not limited to, hydroxides such as tetra-n-propylammonium hydroxide, tetra-n-butylammonium hydroxide, tetra-n-pentylammonium hydroxide, tetra-n-hexylammonium hydroxide, tetracyclohexylammonium hydroxide, tetrakis(trifluoromethyl)ammonium hydroxide, trimethylcyclohexylammonium hydroxide, trimethyl(trifluoromethyl)ammonium hydroxide, trimethyl-t-butylammonium hydroxide, tetra-n-propylphosphonium hydroxide, tetra-n-butylphosphonium hydroxide, tetra-n-pentylphosphonium hydroxide, tetra-n-hexylphosphonium hydroxide, tetracyclohexylphosphonium hydroxide, tetrakis(trifluoromethyl)phosphonium hydroxide, trimethylcyclohexylphosphonium hydroxide, trimethyl(trifluoromethyl)phosphonium hydroxide, and trimethyl-t-butylphosphonium hydroxide; salts of the foregoing hydroxides with halogenic acids and with $C_1$-$C_4$ carboxylic acids. Inter alia, tetrapropylammonium hydroxide, tetrapropylammonium acetate, tetrabutylammonium hydroxide, tetrabutylammonium acetate, tetrabutylphosphonium hydroxide, and tetrabutylphosphonium acetate are preferred. These may be used alone or in admixture of two or more, or in combination with any of the aforementioned well-known curing catalysts.

Insofar as component (II) is compounded in an effective amount to cure the silicone resin (I), the amount of the catalyst is not particularly limited. Specifically the curing catalyst is preferably used in an amount of 0.0001 to 30% by weight, more preferably 0.001 to 10% by weight, based on the solids of the silicone resin. Less than 0.0001 wt% of the catalyst may lead to under-cure and low hardness. More than 30 wt% of the catalyst may lead to a coating which is prone to cracking and poorly water resistant.

Component (III)

Component (III) is a solvent, which is not particularly limited insofar as components (I) and (II) are dissolved or dispersed therein. A solvent based on a highly polar organic solvent is preferred. Examples of the organic solvent include alcohols such as methanol, ethanol, isopropyl alcohol, n-butanol, isobutanol, tert-butanol, and diacetone alcohol; ketones such as methyl propyl ketone, diethyl ketone, methyl isobutyl ketone, cyclohexanone, and diacetone alcohol; ethers such as dipropyl ether, dibutyl ether, anisole, dioxane, ethylene glycol monoethyl ether, ethylene glycol monobutyl

ether, propylene glycol monomethyl ether, and propylene glycol monomethyl ether acetate; and esters such as ethyl acetate, propyl acetate, butyl acetate, and cyclohexyl acetate, which may be used alone or in admixture of two or more.

Component (III) is preferably added in such an amount that the silicone coating composition may have a solids concentration of 1 to 30% by weight, more preferably 5 to 25% by weight. Outside the range, a coating obtained by applying the composition and curing may be defective. A concentration below the range may lead to a coating which is likely to sag, wrinkle or mottle, failing to provide the desired hardness and mar resistance. A concentration beyond the range may lead to a coating which is prone to brushing, whitening or cracking.

Component (IV)

Component (IV) is colloidal silica. Particularly when it is desired to enhance the hardness and mar resistance of a coating, an appropriate amount of colloidal silica may be added. It is a colloidal dispersion of nano-size silica having a particle size of about 5 to 50 nm in a medium such as water or organic solvent. Commercially available water-dispersed or organic solvent-dispersed colloidal silica may be used herein. Examples include Snowtex-O, OS, OL and Methanol Silica Sol by Nissan Chemical Industries, Ltd. The colloidal silica may be compounded in an amount of 0 to 100 parts, preferably 5 to 100 parts, and more preferably 5 to 50 parts by weight per 100 parts by weight as solids of silicone resin (I).

The silicone coating composition may be obtained by mixing the foregoing components (I) to (IV) and optional components in a conventional manner.

For enhanced storage stability, the silicone coating composition may preferably be adjusted to pH 2 to 7, more preferably pH 3 to 6. Since a pH value outside the range may lessen storage stability, a pH adjustor may be added so that the pH falls in the range. For a silicone coating composition having a pH value outside the range, if the pH is more acidic than the range, a basic compound such as ammonia or ethylenediamine may be added for pH adjustment. If the pH is more basic than the range, an acidic compound such as hydrochloric acid, nitric acid, acetic acid or citric acid may be added for pH adjustment. The pH adjustment method is not particularly limited.

If desired, suitable additives may be added to the coating composition insofar as they do not adversely affect the invention. Suitable additives include pH adjusters, leveling agents, thickeners, pigments, dyes, metal oxide particles, metal powder, antioxidants, UV absorbers, UV stabilizers, heat ray reflecting/absorbing agents, flexibilizers, antistatic agents, anti-staining agents, and water repellents.

Method for preparation of organic solvent dispersion of titanium oxide solid-solution particles

The method for preparing an organic solvent dispersion of core/shell type tetragonal titanium oxide solid-solution particles is not particularly limited. The dispersion may be prepared by a combination of well-known steps, for example, the following steps (A) to (E).

In a preferred form, the method for preparing an organic solvent dispersion of titanium oxide solid-solution particles comprises:

- step (A) of furnishing a water dispersion of core/shell type tetragonal titanium oxide solid-solution particles each consisting of a core of tetragonal titanium oxide having tin and manganese incorporated in solid solution and a shell of silicon oxide around the core,
- step (B) of reacting the water dispersion with a silicon compound to form a reaction mixture,
- optional step (C) of diluting the reaction mixture with an organic solvent to form a dilute dispersion,
- optional step (D) of concentrating the reaction mixture or the dilute dispersion into a thick dispersion, and
- step (E) of replacing the solvent of the reaction mixture, the dilute dispersion or the thick dispersion by an organic solvent.

Step (A)

Step (A) is to furnish a water dispersion of titanium oxide solid-solution particles, which is a dispersion of inorganic oxide particles preferably having an average cumulative particle size of 5 to 50 nm in a dispersing medium such as water.

The water dispersion of titanium oxide solid-solution particles, which is furnished in step (A), may be measured by a variety of methods. The range of particle size is described herein as a volume basis 50% cumulative distribution diameter ($D_{50}$) as measured by the dynamic light scattering method using laser light; the particle size may also be

observed as supporting evidence under electron microscope. Although the value determined by such a measurement method does not depend on a particular measuring instrument, such an instrument as Nanotrac UPA-EX150 (Nikkiso Co., Ltd.) may be used for the dynamic light scattering method. For the electron microscopy, a transmission electron microscope H-9500 (Hitachi High-Technologies Corp.) may be used. When a colloidal solution is added to a coating composition, for example, the average cumulative particle diameter of dispersed phase should preferably in a range of 5 to 50 nm, more preferably 5 to 45 nm, even more preferably 10 to 40 nm, and most preferably 12 to 30 nm, because transparency in the visible region is crucial. If the average cumulative particle diameter of dispersed phase exceeds 50 nm, it is larger than the wavelength of the visible region, often leading to noticeable scattering. If the particle diameter is less than 5 nm, the total surface area of dispersed phase may become very large in the system, and so the colloidal dispersion become difficult to handle.

When an electric field is applied across a solid-liquid interface having an electric double layer, an electrophoresis phenomenon of dispersed particles is observed. The zeta potential ($\zeta$) of a colloidal solution is recognized as a value proportional to the electrophoretic mobility of this electrophoresis phenomenon. While the zeta potential may be measured by a variety of methods, one exemplary instrument for measuring zeta potential is ELS-3000 (Otsuka Electron Co., Ltd.). For the colloidal dispersion wherein the dispersing medium is an organic solvent as in the invention, the organic solvents have a wide range of dielectric constant. Since the zeta potential is also a function of dielectric constant, measurement of dielectric constant may be adopted in such a case. One exemplary instrument for measuring dielectric constant is Model 871 (Nihon Rufuto Co., Ltd.). Most often, the zeta potential (in unit mV) falls in a range of $-200 \text{ mV} < \zeta < 200 \text{ mV}$. A greater magnitude of zeta potential indicates that the dispersion system of colloidal solution is stable. Accordingly, the magnitude of zeta potential ($|\zeta|$) is preferably at least 3 mV, more preferably at least 10 mV, and even more preferably at least 20 mV. If the magnitude of zeta potential ($|\zeta|$) is less than 3 mV, the dispersing medium of colloidal solution may have insufficient dispersion stability. Although the upper limit of the magnitude of zeta potential ($|\zeta|$) need not be particularly determined, it generally has the physical limit (about 200 mV).

The colloidal solution furnished in step (A) is characterized by water as dispersing medium. The water used herein may be fresh water available as city water, industrial water, well water, natural water, rain water, distilled water, and deionized water, with deionized water being preferred. Deionized water may be prepared through a desalinator (e.g. FW-10 by Organo Corp. or Direct-QUV3 by Merck Millipore).

The dispersing medium may contain a monohydric alcohol which is miscible with water in any ratio, when it is added in the step of preparing water dispersed colloidal solution as will be described later.

The colloidal solution furnished in step (A) should preferably have a concentration of 1 to 35% by weight, more preferably 5 to 30% by weight, and even more preferably 10 to 25% by weight. If the concentration of the colloidal solution is less than 1 wt%, preparation efficiency may become low. If the concentration exceeds 35 wt%, the colloidal solution may tend to gel, depending on such conditions as pH and temperature. As used herein, the concentration is a percentage of the weight of dispersed phase divided by the weight of the overall colloidal solution (total of dispersed phase and dispersing medium). The concentration may be computed from a weight change which is determined by weighing a certain amount of the colloidal solution and evaporating the dispersing medium to dryness.

The colloidal solution used herein is preferably a colloidal solution of core/shell type particles each consisting of a core of titanium oxide which is complexed with tin and manganese and a shell of silicon oxide enclosing the core.

The shell of silicon oxide formed around the core of tetragonal titanium oxide having tin and manganese incorporated in solid solution contains silicon oxide as the major component and optionally, another component(s) such as tin or aluminum, while it may be formed by any desired techniques. For example, the silicon oxide shell may be formed by hydrolytic condensation of a tetraalkoxysilane. Suitable tetraalkoxysilanes include commonly available ones such as tetramethoxysilane, tetraethoxysilane, tetra(n-propoxy)silane, tetra(isopropoxy)silane, and tetra(n-butoxy)silane. Of these, tetraethoxysilane is preferred from the standpoints of reactivity and safety. For example, useful tetraethoxysilane is commercially available under the tradename: KBE-04 from Shin-Etsu Chemical Co., Ltd. Hydrolytic condensation of a tetraalkoxysilane may be performed in water, optionally in the presence of a condensation catalyst such as ammonia, aluminum salts, organoaluminum compounds, tin salts, or organotin compounds. Inter alia, ammonia is especially preferred because it also serves as a dispersant for the nanosized cores.

Shells of silicon oxide are formed around nanosized cores of tetragonal titanium oxide having tin and manganese incorporated in solid solution, yielding core/shell type tetragonal titanium oxide solid-solution particles. The silicon oxide shells preferably account for 5 to 50%, more preferably 10 to 50%, and even more preferably 20 to 45% by weight based on the overall core/shell type tetragonal titanium oxide particles. If the shell amount is less than 5 wt%, then shell formation may be insufficient. If the shell amount exceeds 50 wt%, then the resulting particles tend to agglomerate together, rendering the dispersion opaque.

Examples of the basic substance (dispersant) which can be present in the water dispersion of core/shell type tetragonal titanium oxide solid-solution particles include ammonia, lithium hydroxide, sodium hydroxide, potassium hydroxide, cesium hydroxide, monolithium dihydrogenphosphate, monosodium dihydrogenphosphate, monopotassium dihydrogenphosphate, monocesium dihydrogenphosphate, dilithium hydrogenphosphate, disodium hydrogenphosphate, dipotassium hydrogenphosphate, dicesium hydrogenphosphate, trilithium phosphate, trisodium phosphate, tripotassium phosphate, tricesium phosphate, lithium hydrogencarbonate, sodium hydrogencarbonate, potassium hydrogencarbonate, cesium hydrogencarbonate, lithium carbonate, sodium carbonate, potassium carbonate, and cesium carbonate. Inter alia, ammonia and sodium hydroxide are preferred. An appropriate amount of the basic substance added as dispersant is up to 1% by weight.

The colloidal solution of core/shell type tetragonal titanium oxide solid-solution particles thus constructed has high transparency. Specifically, when measured by transmitting light of wavelength 550 nm through a quartz cell having an optical path length of 1 mm which is filled with the colloidal solution of core/shell type tetragonal titanium oxide solid-solution particles diluted to a concentration of 1% by weight, the colloidal solution gives a transmittance of preferably at least 80%, more preferably at least 85%, and even more preferably at least 90%. The transmittance is readily determined by UV/visible transmission spectroscopy.

Described below is a method for preparing a colloidal solution of core/shell type tetragonal titanium oxide particles having tin and manganese (collectively referred to as hetero-element, hereinafter) incorporated in solid solution. This method is advantageous in that the solid-solution particles having a specific cumulative particle size distribution diameter can be formed without mechanical unit operations like pulverizing and sifting steps. This ensures very high production efficiency and high transparency, and avoids agglomeration in any of subsequent steps (B) to (E).

The method for preparing a water dispersion of core/shell type tetragonal titanium oxide particles having hetero-element incorporated in solid solution involves the following steps (a) and (b).

Sub-step (a)

In step (a), a water dispersion of tetragonal titanium oxide particles having hetero-element incorporated in solid solution is first prepared. The technique of preparing the water dispersion is not particularly limited. In the preferred procedure, starting materials including a titanium compound, hetero-element compound, basic substance and hydrogen peroxide are reacted in an aqueous dispersing medium to form a solution of peroxotitanic acid containing hetero-element, which is subjected to hydrothermal reaction, yielding a water dispersion of tetragonal titanium oxide particles having hetero-element incorporated in solid solution.

The former stage of reaction to form a solution of peroxotitanic acid containing hetero-element may be one procedure involving the steps of adding a basic substance to a starting titanium compound in an aqueous dispersing medium to form titanium hydroxide, removing impurity ions, adding hydrogen peroxide to form peroxotitanic acid, adding a hetero-element compound thereto to form a hetero-element-containing peroxotitanic acid solution; or another procedure involving the steps of adding a hetero-element compound to a starting titanium compound in an aqueous dispersing medium, adding a basic substance thereto to form titanium hydroxide containing hetero-element, removing impurity ions, and adding hydrogen peroxide to form a hetero-element-containing peroxotitanic acid solution.

Examples of the starting titanium compound include salts of titanium with mineral acids such as hydrochloride, nitrate and sulfate, salts of titanium with organic acids such as formate, citrate, oxalate, lactate and glycolate, and titanium hydroxide which is precipitated by adding alkali to such aqueous solution for hydrolysis. One or a mixture of two or more of the foregoing may be used.

As the hetero-element compound, any of the tin and manganese salts, especially tin and manganese chloride may be used so as to give the solid-solution content defined above. Also the aqueous dispersing medium and basic substance may be selected from the afore-mentioned examples and used in the afore-mentioned formulation.

Hydrogen peroxide serves to convert the starting titanium compound or titanium hydroxide to peroxotitanate, that is, a titanium oxide-base compound having Ti-O-O-Ti bond. Typically aqueous hydrogen peroxide is used. The amount of hydrogen peroxide added is preferably 1.5 to 10 times the total moles of titanium and hetero-element. The reaction of hydrogen peroxide to convert the starting titanium compound or titanium hydroxide to peroxotitanic acid is preferably conducted at a temperature of 5 to 60°C and for a time of 30 minutes to 24 hours.

The hetero-element-containing peroxotitanic acid solution may contain a basic or acidic substance for pH adjustment or the like. Exemplary basic substances include ammonia and analogs as mentioned above. Exemplary acidic substances include mineral acids such as sulfuric acid, nitric acid, hydrochloric acid, carbonic acid, phosphoric acid, and hydrogen peroxide, and organic acids such as formic acid, citric acid, oxalic acid, lactic acid, and glycolic acid. The hetero-element-containing peroxotitanic acid solution is preferably at pH 1 to 7, more preferably pH 4 to 7, for safe handling.

The later stage of reaction to form a colloidal solution of tetragonal titanium oxide particles having hetero-element incorporated in solid solution is by subjecting the hetero-element-containing peroxotitanic acid solution to hydrothermal reaction under conditions: a pressure of 0.01 to 4.5 MPa, preferably 0.15 to 4.5 MPa, a temperature of 80 to 250°C, preferably 120 to 250°C, and a time of 1 minute to 24 hours. By this reaction, the hetero-element-containing peroxotitanic acid is converted to tetragonal titanium oxide particles having hetero-element incorporated in solid solution.

In the invention, the dispersion of tetragonal titanium oxide particles having hetero-element incorporated in

solid solution is blended with a monohydric alcohol, ammonia, and a tetraalkoxysilane (e.g. tetraethoxysilane).

Examples of the monohydric alcohol used herein include methanol, ethanol, propanol, isopropyl alcohol, and a mixture thereof, with ethanol being preferred. An appropriate amount of the monohydric alcohol used is up to 100 parts, more preferably up to 30 parts by weight per 100 parts by weight of the titanium oxide particle dispersion. The lower limit of the amount of the monohydric alcohol used is preferably at least 5 parts, more preferably at least 10 parts by weight. By changing the amount of the monohydric alcohol blended, the thickness of silicon oxide shells formed around cores of tetragonal titanium oxide having hetero-element incorporated in solid solution in the subsequent step (b) can be controlled. In general, as the amount of the monohydric alcohol blended increases, the thickness of silicon oxide shells increases because the solubility of silicon reactant (tetraalkoxysilane) in the reaction system increases while the dispersed state of titanium oxide is not adversely affected at all. That is, the water dispersion of core/shell type tetragonal titanium oxide particles having hetero-element incorporated in solid solution can be formed in the subsequent step so as to fall in a specific cumulative distribution diameter, without mechanical unit operations like pulverizing and sifting steps, while the dispersion can be endowed with transparency in the visible region. Although the preferred amount of the monohydric alcohol used is up to 30 parts by weight as mentioned above, a more amount of the alcohol may be used. Since the alcohol can be selectively removed in the subsequent concentration step, a suitable operation may be added if necessary.

Ammonia used herein is typically aqueous ammonia. Instead of addition of aqueous ammonia, ammonia gas may be blown into the water dispersion of tetragonal titanium oxide particles having hetero-element incorporated in solid solution. It is also acceptable to add a reagent capable of generating ammonia in the dispersion, instead of addition of aqueous ammonia. The concentration of aqueous ammonia is not particularly limited, and any commercially available aqueous ammonia may be used. In the preferred procedure, 5 wt% aqueous ammonia is used and added in increments until the water dispersion of tetragonal titanium oxide particles having hetero-element incorporated in solid solution reaches pH 7 to 12, more preferably pH 8 to 10.

The tetraalkoxysilane may be selected from the aforementioned examples, with tetraethoxysilane being preferred. Tetraethoxysilane may be used as such while a (partial) hydrolysate of tetraethoxysilane is also useful. Tetraethoxysilane or (partial) hydrolysate thereof may be any of commercially available products, for example, KBE-04 (tetraethoxysilane by Shin-Etsu Chemical Co., Ltd.), Silicate 35 and Silicate 45 (partial hydrolytic condensate of tetraethoxysilane, Tama Chemicals Co., Ltd.), and ESI40 and ESI48 (partial hydrolytic condensate of tetraethoxysilane, Colcoat Co., Ltd.). Tetraethoxysilane or tetraalkoxysilanes may be used alone or in admixture of two or more.

The tetraalkoxysilane is blended in such an amount as to give 5 to 50%, preferably 10 to 45%, and more preferably 20 to 40% by weight of silicon oxide after hydrolysis, based on the silicon oxide-coated titanium oxide. Less than 5 wt% of silicon oxide indicates insufficient shell formation whereas more than 50 wt% of silicon oxide may promote agglomeration of particles, rendering the dispersion opaque.

When the water dispersion of tetragonal titanium oxide particles having hetero-element incorporated in solid solution is blended with a monohydric alcohol, ammonia, and a tetraalkoxysilane (e.g. tetraethoxysilane), any suitable mixer, for example, a magnetic stirrer, mechanical mixer, or shaker may be used.

<u>Sub-step (b)</u>

In step (b), the mixture from step (a) is rapidly heated for forming core/shell type tetragonal titanium oxide solid-solution particles each consisting of a nanosized core of tetragonal titanium oxide having hetero-element incorporated in solid solution and a shell of silicon oxide around the core.

The means of rapidly heating the mixture of step (a) may be any of the existing heating means, for example, microwave heating, a microreactor of high heat exchange efficiency, and heat exchanger with an external heat source of a high heat capacity. Inter alia, microwave heating is preferred because of uniform and rapid heating ability. The step of heating the mixture by applying microwave radiation may be either batchwise or continuous.

The rapid heating step is preferably at such a rate as to elevate the temperature from room temperature to the boiling point of the dispersing medium (typically about 10 to 80°C) within a time of 10 minutes. If the heating step takes more than 10 minutes, undesirably the particles tend to agglomerate together.

Where the rapid heating step includes microwave heating, the electromagnetic wave may be selected from the frequency range of 300 MHz to 3 THz. For example, according to the Radio Law of Japan, the microwave frequency band that can be utilized is limited to 2.45 GHz, 5.8 GHz, 24 GHz and the like. Of these, the 2.45 GHz band is most often utilized on a commercial basis, and magnetron oscillators in this frequency band are available at an acceptable price. The microwave standard differs depending on the law, economical status and the like of a particular country or region. Technically the frequency need not be limited. As long as the rated power is in the range of 100 W to 24 kW, preferably 100 W to 20 kW, any commercial microwave heater may be used, for example, μReactor Ex (Shikoku Instrumentation Co., Inc.) or Advancer (Biotage Japan Ltd.).

Desired microwave heating may be completed within a time of 10 minutes by adjusting the power of the

microwave heater and by adjusting the volume of reaction solution in the case of batchwise reaction or the flow rate of reaction solution in the case of continuous reaction.

The colloidal solution of core/shell type tetragonal titanium oxide particles having hetero-element incorporated in solid solution, thus obtained, may be used in the method of the invention.

Step (B)

Step (B) is to react the water dispersion with a silicon compound to form a reaction mixture. The preferred silicon compound added is a silane compound having the general formula (1) and/or (partial) hydrolytic condensate thereof.

$$R^1_pR^2_qR^3_rSi(OR^4)_{4-p-q-r} \qquad (1)$$

Herein $R^1$, $R^2$, $R^3$, $R^4$, p, q, and r are as defined above.

Examples of the silane compound having formula (1) wherein p=1 and q=r=0 include hydrogentrimethoxysilane, hydrogentriethoxysilane, methyltrimethoxysilane, methyltriethoxysilane, methyltriisopropoxysilane, ethyltrimethoxysilane, ethyltriethoxysilane, ethyltriisopropoxysilane, propyltrimethoxysilane, propyltriethoxysilane, propyltriisopropoxysilane, phenyltrimethoxysilane, vinyltrimethoxysilane, allyltrimethoxysilane, γ-methacryloxypropyltrimethoxysilane, γ-methacryloxypropyltriethoxysilane, γ-acryloxypropyltrimethoxysilane, γ-glycidoxypropyltrimethoxysilane, γ-glycidoxypropyltriethoxysilane, β-(3,4-epoxycyclohexyl)ethyltrimethoxysilane, γ-chloropropyltrimethoxysilane, 3,3,3-trifluoropropyltrimethoxysilane, 3,3,3-trifluoropropyltriethoxysilane, perfluorooctylethyltrimethoxysilane, γ-mercaptopropyltrimethoxysilane, γ-aminopropyltrimethoxysilane, γ-aminopropyltriethoxysilane, N-(2-aminoethyl)aminopropyltrimethoxysilane, γ-isocyanatopropyltrimethoxysilane, γ-isocyanatopropyltriethoxysilane, tris(3-trimethoxysilylpropyl)isocyanurate and tris(3-triethoxysilylpropyl)isocyanurate having isocyanate groups bonded together,
partial hydrolytic condensates of methyltrimethoxysilane (commercially available as KC-89S and X-40-9220 from Shin-Etsu Chemical Co., Ltd.), and
partial hydrolytic condensates of methyltrimethoxysilane and γ-glycidoxypropyltrimethoxysilane (commercially available as X-41-1056 from Shin-Etsu Chemical Co., Ltd.)

Examples of the silane compound having formula (1) wherein p=1 and q=r=0 and $R^1$ is polydimethylsiloxane include compounds having the general formula (3).

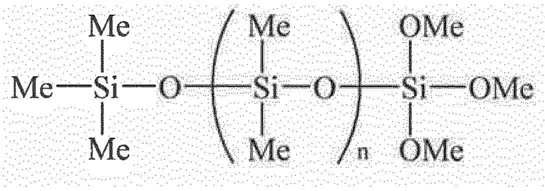

(3)

In formula (3), preferably n is an integer of 0 to 50, more preferably an integer of 5 to 40, and even more preferably an integer of 10 to 30. If n exceeds 50, the compound has more silicone oil properties, with the solubility of surface-treated organosol in various resins being limited. A compound having the average structure of formula (3) wherein n=30 is commercially available as X-24-9822 from Shin-Etsu Chemical Co., Ltd.

Examples of the silane compound having formula (1) wherein p=1, q=1 and r=0 include methylhydrogendimethoxysilane, methylhydrogendiethoxysilane, dimethyldimethoxysilane, dimethyldiethoxysilane, methylethyldimethoxysilane, diethyldimethoxysilane, diethyldiethoxysilane, methylpropyldimethoxysilane, methylpropyldiethoxysilane, diisopropyldimethoxysilane, phenylmethyldimethoxysilane, vinylmethyldimethoxysilane, γ-glycidoxypropylmethyldimethoxysilane, γ-glycidoxypropylmethyldiethoxysilane, β-(3,4-epoxycyclohexyl)ethylmethyldimethoxysilane, γ-methacryloxypropylmethyldimethoxysilane, γ-methacryloxypropylmethyldiethoxysilane, γ-mercaptopropylmethyldimethoxysilane, γ-aminopropylmethyldiethoxysilane, and N-(2-aminoethyl)aminopropylmethyldimethoxysilane.

Examples of the silane compound having formula (1) wherein p=1, q=1 and r=1 include trimethylmethoxysilane, trimethylethoxysilane, triethylmethoxysilane, n-propyldimethylmethoxysilane, n-propyldiethylmethoxysilane, isopropyldimethylmethoxysilane, isopropyldiethylmethoxysilane, propyldimethylethoxysilane, n-butyldimethylmethoxysilane, n-butyldimethylethoxysilane, n-hexyldimethylmethoxysilane, n-hexyldimethylethoxysilane, n-pentyldimethylmethoxysilane, n-pentyldimethylethoxysilane, n-hexyldimethylmethoxysilane, n-hexyldimethylethoxysilane, n-decyldimethylmethoxysilane, and n-decyldimethylethoxysilane.

The amount of the silicon compound added in step (B) is preferably 30 to 200% by weight, more preferably 50 to 150% by weight, and even more preferably 60 to 120% by weight, based on the solids content of the inorganic oxide

colloidal water dispersion of step (A). An amount in excess of 200 wt% may cause gelation whereas an amount of less than 30 wt% may allow for agglomeration.

In step (B), the mode of silicon compound addition may be dropwise addition in liquid, dropwise addition outside liquid, or addition in portions, with the dropwise addition in liquid being preferred.

In step (B) of adding silicon compound, the dispersion is preferably kept at a temperature of 0 to 45°C, more preferably 5 to 40°C, and even more preferably 10 to 35°C. At a temperature below 0°C, the inorganic oxide colloidal water dispersion may be altered via a state change by freezing. At a temperature above 45°C, the silane may undergo unexpected hydrolytic condensation reaction. In step (B), the reaction solution may elevate to a temperature not higher than 70°C as a result of hydrolytic condensation. Also a suitable reaction catalyst may be used in step (B).

Step (C)

Step (C) is to dilute the reaction solution with an organic solvent, if necessary. Suitable organic solvents include monohydric alcohols such as methanol, ethanol, isopropyl alcohol and butanol; polyhydric alcohols such as ethylene glycol, propylene glycol and glycerol; ethers such as propylene glycol monomethyl ether, ethylene glycol monomethyl ether, glyme, and diglyme; ketones such as acetone and methyl isobutyl ketone; esters such as ethyl acetate and propylene glycol monomethyl ether acetate; and reactive esters such as hexanediol diacrylate, trimethylolpropane triacrylate, pentaerythritol tetraacrylate, and dipentaerythritol hexaacrylate, with ethanol and isopropyl alcohol being preferred. Dilution is preferably carried out to avoid solvent shock in the subsequent steps (D) and (E) although dilution is not essential. The dilution factor is preferably 2 to 20 times, more preferably 3 to 15 times, and even more preferably 5 to 10 times by volume. A dilution factor of less than 2 may be ineffective for mitigating solvent shock. If the dilution factor exceeds 20, steps (D) and (E) may require an unnecessarily long time of treatment.

Step (D)

Step (D) is to concentrate the reaction mixture of step (B) or the dilute dispersion of step (C) into a thick dispersion. Concentration may be accomplished by such unit operation as heat concentration or ultrafiltration. Heat concentration is preferably carried out under reduced pressure. The pressure is preferably 1 to 760 mmHg, more preferably 5 to 300 mmHg. A pressure of less than 1 mmHg is undesirable because of possible bumping of the dispersing medium whereas a pressure in excess of 760 mmHg is undesirable because of inefficient evaporation. Heating may be selected from conductive heat transfer, inductive heat transfer and radiant heat transfer. Preferred is radiant heat transfer using microwave radiation. For ultrafiltration, a membrane having an appropriate pore size may be used. Suitable ultrafiltration membranes or instruments which can be used herein are commercially available. Examples include Amicon® Ultra (Merck Millipore), Microza® (Asahikasei Chemicals), Ultrafilter® Q0100, P0200, Q0500, and Q2000 (Advantec Toyo), Krauss-Maffei DCF Crossflow filter (Andritz KMPT GmbH), and Membralox® (Noritake Co., Ltd.). For ultrafiltration, a fractional molecular weight is preferably in the range of 10 to 300 kDa, more preferably 50 to 200 kDa, and even more preferably 70 to 150 kDa. Also for ultrafiltration, an average pore size is preferably in the range of 5 to 30 nm, more preferably 5 to 20 nm, and even more preferably 6 to 15 nm. Preferably, ultrafiltration is conducted under applied pressure. The applied pressure is preferably 0.01 to 1.0 MPa, more preferably 0.03 to 0.5 MPa, and even more preferably 0.05 to 0.3 MPa in gauge pressure. A gauge pressure of less than 0.01 Pa may lead to inefficient ultrafiltration. A gauge pressure in excess of 1.0 MPa is acceptable as long as the structure is pressure resistant. Pressure may also be applied by centrifugation. A filtration unit like Amicon® Ultra (Merck Millipore) is adapted for centrifugal pressure application. In the case of a centrifuge with a spin radius of about 0.2 m, for example, a centrifugal force is preferably produced by spinning at 100 to 5,000 rpm, more preferably 200 to 3,000 rpm, and even more preferably 500 to 2,000 rpm.

In step (D), the dispersion is optionally concentrated by removing the dispersing medium therefrom. The dispersing medium includes water contained in the water dispersion prepared in step (A), the silicon compound and/or hydrolytic condensate of silicon compound added in step (B) and/or alcohols derived from silicate esters produced by hydrolytic condensation, and organic solvent added in step (C). By exuding the dispersion of such complex system, the dispersion is preferably concentrated to a solids concentration of 1 to 30%, more preferably 5 to 25%, and even more preferably 10 to 20% by weight.

Step (E)

Step (E) is solvent replacement by an organic solvent. Suitable organic solvents include hydrocarbons of 5 to 30 carbon atoms such as pentane, hexane, heptane, octane, nonane, decane, undecane, dodecane, tridecane, tetradecane, pentadecane, hexadecane, heptadecane, octadecane, nonadecane, icosane, docosane, tricosane, tetracosane, pentacosane, hexacosane, heptacosane, octacosane, nonacosane, triacontane, benzene, toluene, o-xylene, m-xylene, p-xylene, and mixtures of two or more of the foregoing, known as petroleum ether, kerosine, ligroin, and nujol;

mono- to polyhydric alcohols such as methanol, ethanol, 1-propanol, 2-propanol, cyclopentanol, ethylene glycol, propylene glycol, β-thiadiglycol, butylene glycol, and glycerol; ethers such as diethyl ether, dipropyl ether, cyclopentyl methyl ether, ethylene glycol dimethyl ether, diethylene glycol dimethyl ether, triethylene glycol dimethyl ether, ethylene glycol monomethyl ether, ethylene glycol monoethyl ether, ethylene glycol monopropyl ether, ethylene glycol monobutyl ether, propylene glycol monomethyl ether, propylene glycol monoethyl ether, propylene glycol monopropyl ether, propylene glycol monobutyl ether, butylene glycol monomethyl ether, butylene glycol monoethyl ether, butylene glycol monopropyl ether, and butylene glycol monobutyl ether; esters such as methyl formate, ethyl formate, propyl formate, butyl formate, methyl acetate, ethyl acetate, propyl acetate, butyl acetate, methyl propionate, ethyl propionate, propyl propionate, butyl propionate, methyl butyrate, ethyl butyrate, propyl butyrate, butyl butyrate, methyl benzoate, ethyl benzoate, propyl benzoate, butyl benzoate, dimethyl oxalate, diethyl oxalate, dipropyl oxalate, dibutyl oxalate, dimethyl malonate, diethyl malonate, dipropyl malonate, dibutyl malonate, ethylene glycol diformate, ethylene glycol diacetate, ethylene glycol dipropionate, ethylene glycol dibutyrate, propylene glycol diacetate, propylene glycol dipropionate, propylene glycol dibutyrate, ethylene glycol methyl ether acetate, propylene glycol methyl ether acetate, butylene glycol monomethyl ether acetate, ethylene glycol ethyl ether acetate, propylene glycol ethyl ether acetate, and butylene glycol monoethyl ether acetate; ketones such as acetone, diacetone alcohol, diethyl ketone, methyl ethyl ketone, methyl isobutyl ketone, methyl n-butyl ketone, dibutyl ketone, cyclopentanone, cyclohexanone, cycloheptanone, and cyclooctanone; amides such as dimethylformamide, dimethylacetamide, tetraacetylethylenediamide, tetraacetylhexamethylenetetramide, N,N-dimethylhexamethylenediamine diacetate.

In step (E), a reactive organic low-molecular-weight compound may also be used as the organic solvent. Suitable organic compounds include (meth)acrylic esters of (meth)acrylic acids with (polyhydric) alcohols, for example, monoesters such as methyl methacrylate (MMA), methyl acrylate (MA), ethyl methacrylate, ethyl acrylate, hydroxyethyl acrylate (HEA), hydroxyethyl methacrylate (HEMA), hydroxypropyl acrylate, 4-hydroxybutyl acrylate, isobutyl acrylate, tert-butyl acrylate, n-octyl acrylate, isooctyl acrylate, isononyl acrylate, lauryl acrylate, stearyl acrylate, isostearyl acrylate, isonorbornyl acrylate, tetrahydrofurfuryl acrylate, methoxyethyl acrylate, methoxypolyethylene glycol acrylate, 2-methyl-2-ethyl-1,3-dioxolan-4-yl acrylate, [{cyclohexanespiro-2-(1,3-dioxolan-4-yl)}methyl] acrylate, and [(3-ethyloxetan-3-yl)methyl] acrylate; diesters such as ethylene glycol diacrylate, propylene glycol diacrylate, butanediol diacrylate, pentanediol diacrylate, hexanediol diacrylate, heptanediol diacrylate, octanediol diacrylate, nonanediol diacrylate, decanediol diacrylate, glycerol 1,2-diacrylate, glycerol 1,3-diacrylate, pentaerythritol diacrylate, 2-hydroxy-3-acryloyloxypropyl methacrylate, tricyclodecane dimethanol diacrylate, dipropylene glycol diacrylate, and tripropylene glycol diacrylate; and polyfunctional esters such as glycerol triacrylate, trimethylolpropane triacrylate, pentaerythritol triacrylate, dipentaerythritol triacrylate, ethoxylated isocyanuric acid triacrylate, ethoxylated glycerol triacrylate, ethoxylated trimethylolpropane triacrylate, pentaerythritol tetraacrylate, dipentaerythritol hexaacrylate, ditrimethylolpropane tetraacrylate, ethoxylated pentaerythritol tetraacrylate, trimethylolpropane trimethacrylate, trispentaerythritol octaacrylate, octa(3-acryloxypropylsilsesquioxane), 3-acryloxypropylsilsesquioxane oligomers, and acryloxypropyl silsesquioxane oligomers substitutable with polydimethylsiloxane chain and/or perfluoro(oxy)alkyl chain.

In step (E), solvent replacement may be accomplished by such unit operation as heat concentration or ultrafiltration. Heat concentration is preferably carried out under reduced pressure. The pressure is preferably 1 to 760 mmHg, more preferably 5 to 300 mmHg. A pressure of less than 1 mmHg is undesirable because of possible bumping of the dispersing medium whereas a pressure in excess of 760 mmHg is undesirable because of inefficient evaporation. Heating may be selected from conductive heat transfer, inductive heat transfer and radiant heat transfer. Preferred is radiant heat transfer using microwave radiation. For ultrafiltration, a membrane having an appropriate pore size may be used. Suitable ultrafiltration membranes or instruments which can be used herein are commercially available. Examples include Amicon® Ultra (Merck Millipore), Microza® (Asahikasei Chemicals), Ultrafilter® Q0100, P0200, Q0500, and Q2000 (Advantec Toyo), Krauss-Maffei DCF Crossflow filter (Andritz KMPT GmbH), and Membralox® (Noritake Co., Ltd.). For ultrafiltration, a fractional molecular weight is preferably in the range of 10 to 300 kDa, more preferably 50 to 200 kDa, and even more preferably 70 to 150 kDa. Also for ultrafiltration, an average pore size is preferably in the range of 5 to 30 nm, more preferably 5 to 20 nm, and even more preferably 6 to 15 nm. Preferably, ultrafiltration is conducted under applied pressure. The applied pressure is preferably 0.01 to 1.0 MPa, more preferably 0.03 to 0.5 MPa, and even more preferably 0.05 to 0.3 MPa in gauge pressure. A gauge pressure of less than 0.01 Pa may lead to inefficient ultrafiltration. A gauge pressure in excess of 1.0 MPa is acceptable as long as the structure is pressure resistant. Pressure may also be applied by centrifugation. A filtration unit like Amicon® Ultra (Merck Millipore) is adapted for centrifugal pressure application. In the case of a centrifuge with a spin radius of about 0.2 m, for example, a centrifugal force is preferably produced by spinning at 100 to 5,000 rpm, more preferably 200 to 3,000 rpm, and even more preferably 500 to 2,000 rpm.

The volume of organic solvent used in step (E) is greater than the volume of the filtration chamber by a factor of preferably 1 to 20, more preferably 2 to 10, and even more preferably 3 to 8. Solvent replacement may be insufficient with a volume factor of less than 1. Efficiency may become low with a volume factor of more than 20.

The organic solvent dispersion of titanium oxide solid-solution particles preferably has a water content of not more than 20%, more preferably not more than 1% by weight. If the water content exceeds 20 wt%, a coating of a coating

composition comprising the dispersion may be whitened. The water content may be measured by Karl Fischer's method.

If desired, the preparation method of the invention may further involve water removing step (F) and/or surface treatment step (G).

In step (F), water is removed to a water concentration of 1,000 ppm or less, more preferably 500 ppm or less, even more preferably 100 ppm or less, and most preferably 10 ppm or less.

In the practice of step (F), physical adsorption using a zeolite having pores with a diameter of 3 to 10 angstroms (Å) and/or chemical reaction using ortho-organic acid ester or gem-dialkoxyalkane having the general formula (7) may be used.

$$(R^{50})(R^{60})CR^7R^8 \qquad (7)$$

Herein $R^5$ and $R^6$ are each independently a $C_1$-$C_{10}$ hydrocarbon group and may bond together to form a ring, $R^7$ and $R^8$ are each independently a $C_1$-$C_{10}$ hydrocarbon group and may bond together to form a ring.

Exemplary materials which can be used as the zeolite include those of the following chemical formulae: $K_4Na_4[Al_8Si_8O_{32}]$, $Na[AlSi_2O_6]$, $Na_2[Al_2Si_7O_{18}]$, $(K,Ba,Sr)_2Sr_2Ca_2(Ca,Na)_4[Al_{18}Si_{18}O_{72}]$, $Li[AlSi_2O_6]O$, $Ca_8Na_3[Al_{19}Si_{77}O_{192}]$, $(Sr,Ba)_2[Al_4Si_{12}O_{32}]$, $(Sr,Ba)_2[Al_4Si_{12}O_{32}]$, $(Ca_{0.5},Na,K)_4[Al_4Si_8O_{24}]$, $CaMn[Be_2Si_5O_{13}(OH)_2]$, $(Na,K,Ca_{0.5},Sr_{0.5},Ba_{0.5},Mg_{0.5})_6[Al_6Si_{30}O_{72}]$, $Ca[Al_2Si_3O_{10}]$, $(Ca_{0.5},Na,K)_{4-5}[Al_{4-5}Si_{20-19}O_{48}]$, $Ba[Al_2Si_3O_{10}]$, $(Ca,Na_2)[Al_2Si_4O_{12}]$, $K_2(Na,Ca_{0.5})_8[Al_{10}Si_{26}O_{72}]$, $(Na,Ca_{0.5},Mg_{0.5},K)_z[Al_zSi_{12-z}O_{24}]$, $(K,Na,Mg_{0.5},Ca_{0.5})_6[Al6Si_{30}O_{72}]$, $NaCa_{2.5}[Al_6Si_{10}O_{32}]$, $Na_4[Zn_2Si_7O_{18}]$, $Ca[Al_2Si_2O_8]$, $(Na_2,Ca,K_2)_4[Al_8Si_{16}O_{48}]$, $Na_5[Al_5Si_{11}O_{32}]$, $(Na,Ca)_{6-8}[(Al,Si)_{20}O_{40}]$, $Ca[Al_2Si_6O_{16}]$, $Na_3Mg_3Ca_5[Al_{19}Si_{117}O_{272}]$, $(Ba_{0.5},Ca_{0.}5,K,Na)_5[Al_5Si_{11}O_{32}]$, $(Ca_{0.5},Sr_{0.5},Ba_{0.5},Mg_{0.5},Na,K)_9[Al_9Si_{27}O_{72}]$, $Li_2Ca_3[Be_3Si_3O_{12}]F_2$, $K_6[Al_4Si_6O_{20}]B(OH)_4Cl$, $Ca_4[Al_8Si_{16}O_{48}]$, $K_4Na_{12}[Be_8Si_{28}O_{72}]$, $(Pb_7Ca_2)[Al_{12}Si_{36}(O,OH)_{100}]$, $(Mg_{2.5}K_2Ca_{1.5})[Al_{10}Si_{26}O_{72}]$, $K_5Ca_2[Al_9Si_{23}O_{64}]$, $Na_{16}Ca_{16}[Al_{48}Si_{72}O_{240}]$, $K_9[Al_gSi_{23}O_{64}]$, $(Na_2,Ca,K_2)_4[Al_8Si_{40}O_{96}]$, $Na_3Ca_4[Al_{11}Si_{85}O_{192}]$, $Na_2[Al_2Si_3O_{10}]$, $CaKMg[Al_5S_{13}O_{36}]$, $(Ca_{5.5}Li_{3.6}K_{1.2}Na_{0.2})Li_8[Be_{24}P_{24}O_{96}]$, $Ca_2[Al_4Si_4O_{15}(OH)_2]$, $(K,Ca_{0.5},Na,Ba_{0.5})_{10}[Al_{10}Si_{32}O_{84}]$, $K_9Na(Ca,Sr)[Al_{12}Si_{24}O_{72}]$, $(K,Na,Ca_{0.5},Ba_{0.5})_z[Al_zSi_{16-z}O_{32}]$, $(Cs,Na)[AlSi_2O_6]$, $Ca_2[Be(OH)_2Al_2Si_4O_{13}]$, $Ca[Al_2Si_3O_{10}]$, $Ca[Al_2Si_7O_{18}]$, $(Ca_{0.5},Na,K)_9[Al_9Si_{27}O_{72}]$, $NaCa[Al_3Si_{17}O_{40}]$, $Ca_2Na[Al_5Si_5O_{20}]$, $Ca[Al_2Si_6O_{16}]$, $Ca_4(K_2,Ca,Sr,Ba)_3Cu_3(OH)_8[Al_{12}Si_{12}O_{48}]$, $Ca[Al_2Si_4O_{12}]$, $Ca[Be_3(PO_4)_2(OH)_2]$, $K_zCa_{(1.5-0.5z)}[Al_3Si_3O_{12}]$, and $Ca[Al_2Si_6O_{16}]$ wherein z is a number of 0 to 1. Those materials of the above chemical formulae, preferably having pores with a diameter of 3 to 10 Å may be used. The pore diameter is preferably 3 to 10 Å, more preferably 4 to 8 Å, and even more preferably 4 to 6 Å. If the pore diameter is less than 3 Å, sufficient adsorption of water may be difficult. If the pore diameter exceeds 10 Å, adsorption of water may take a time.

Suitable dewatering zeolites are commercially available under the trade name of Molecular Sieve 3A, Molecular Sieve 4A, Molecular Sieve 5A, Molecular Sieve 6A, Molecular Sieve 7A, Molecular Sieve 8A, Molecular Sieve 9A, Molecular Sieve 10A, Molecular Sieve 3X, Molecular Sieve 4X, Molecular Sieve 5X, Molecular Sieve 6X, Molecular Sieve 7X, Molecular Sieve 8X, Molecular Sieve 9X, and Molecular Sieve 10X, which may be used alone or in combination. For example, LTA framework zeolite having a pore diameter of about 4 Å is commercially available as Catalog No. 25958-08 from Kanto Kagaku Co., Ltd.

Zeolite is preferably used in an amount of 1 to 20% by weight, more preferably 2 to 15% by weight, and even more preferably 5 to 10% by weight, based on the dispersion from step (E). Less than 1 wt% of zeolite may be too small to exert the dewatering effect whereas more than 20 wt% is unnecessary in practice because the dewatering effect is no longer improved.

Alternatively, step (F) is carried out via chemical reaction using ortho-organic acid ester or gem-dialkoxyalkane having the general formula (7):

$$(R^5O)\ (R^6O)\ CR^7R^8 \qquad (7)$$

wherein $R^5$ and $R^6$ are each independently a $C_1$-$C_{10}$ hydrocarbon group and may bond together to form a ring, $R^7$ and $R^8$ are each independently a $C_1$-$C_{10}$ hydrocarbon group and may bond together to form a ring.

Both the ortho-organic acid ester and gem-dialkoxyalkane have an acetal skeleton in the molecule. The ortho-organic acid ester is an acetal form of organic acid ester, and the gem-dialkoxyalkane is an acetal form of ketone. The acetal compound can be used for dewatering purpose since the acetal compound has the nature that it is decomposed into alcohol and carbonyl compound upon reaction with water. Since water is consumed via the reaction, the same effect as the addition of organic solvent is obtained.

Examples of the ortho-organic acid ester include methyl orthoformate, ethyl orthoformate, propyl orthoformate, butyl orthoformate, methyl orthoacetate, ethyl orthoacetate, propyl orthoacetate, butyl orthoacetate, methyl orthopropionate, ethyl orthopropionate, propyl orthopropionate, butyl orthopropionate, methyl orthobutyrate, ethyl orthobutyrate, propyl orthobutyrate, and butyl orthobutyrate.

Examples of the gem-dialkoxyalkane include acetone dimethyl acetal, acetone diethyl acetal, acetone dipropyl

acetal, acetone dibutyl acetal, acetone ethylene glycol acetal, acetone propylene glycol acetal, methyl ethyl ketone dimethyl acetal, methyl ethyl ketone diethyl acetal, methyl ethyl ketone dipropyl acetal, methyl ethyl ketone dibutyl acetal, methyl ethyl ketone ethylene glycol acetal, methyl ethyl ketone propylene glycol acetal, methyl isobutyl ketone dimethyl acetal, methyl isobutyl ketone diethyl acetal, methyl isobutyl ketone dipropyl acetal, methyl isobutyl ketone dibutyl acetal, methyl isobutyl ketone ethylene glycol acetal, methyl isobutyl ketone propylene glycol acetal, cyclopentanone dimethyl acetal, cyclopentanone diethyl acetal, cyclopentanone dipropyl acetal, cyclopentanone dibutyl acetal, cyclopentanone ethylene glycol acetal, cyclopentanone propylene glycol acetal, cyclohexanone dimethyl acetal, cyclohexanone diethyl acetal, cyclohexanone dipropyl acetal, cyclohexanone dibutyl acetal, cyclohexanone ethylene glycol acetal, and cyclohexanone propylene glycol acetal.

With respect to the acetal skeleton compound, if a certain type is preferred among the molecules formed by reaction with water, the compound may be chosen from such anticipation. For example, where water is removed from the organosol and replaced by cyclohexanone and butanol, the purpose may be attained using cyclohexanone dibutyl acetal.

The acetal skeleton compound is preferably used in an amount of 0.5 to 20% by weight, more preferably 2 to 15% by weight, and even more preferably 5 to 10% by weight, based on the dispersion from step (E). Less than 0.5 wt% of the compound may be too small to exert the dewatering effect. More than 20 wt% is unnecessary in practice because in most cases, the dewatering effect is no longer improved, and when a dispersion of the acetal skeleton compound is mixed with a resin or the like, the compound can exert unexpected effects like etching.

Step (G) is surface treatment with a silane compound having the general formula (1) and/or (partial) hydrolytic condensate thereof.

$$R^1_pR^2_qR^3_rSi\,(OR^4)_{4-p-q-r} \qquad (1)$$

Herein $R^1$, $R^2$, $R^3$, $R^4$, p, q and r are as defined above.

Examples of the silane compound having formula (1) wherein p=1 and q=r=0 include hydrogentrimethoxysilane, hydrogentriethoxysilane, methyltrimethoxysilane, methyltriethoxysilane, methyltriisopropoxysilane, ethyltrimethoxysilane, ethyltriethoxysilane, ethyltriisopropoxysilane, propyltrimethoxysilane, propyltriethoxysilane, propyltriisopropoxysilane, phenyltrimethoxysilane, vinyltrimethoxysilane, allyltrimethoxysilane, γ-methacryloxypropyltrimethoxysilane, γ-methacryloxypropyltriethoxysilane, γ-acryloxypropyltrimethoxysilane, γ-glycidoxypropyltrimethoxysilane, γ-glycidoxypropyltriethoxysilane, β-(3,4-epoxycyclohexyl)ethyltrimethoxysilane, γ-chloropropyltrimethoxysilane, 3,3,3-trifluoropropyltrimethoxysilane, 3,3,3-trifluoropropyltriethoxysilane, perfluorooctylethyltrimethoxysilane, γ-mercaptopropyltrimethoxysilane, γ-aminopropyltrimethoxysilane, γ-aminopropyltriethoxysilane, N-(2-aminoethyl)aminopropyltrimethoxysilane, γ-isocyanatopropyltrimethoxysilane, γ-isocyanatopropyltriethoxysilane, tris(3-trimethoxysilylpropyl)isocyanurate and tris(3-triethoxysilylpropyl)isocyanurate having isocyanate groups bonded together, partial hydrolytic condensates of methyltrimethoxysilane (commercially available as KC-89S and X-40-9220 from Shin-Etsu Chemical Co., Ltd.), and partial hydrolytic condensates of methyltrimethoxysilane and γ-glycidoxypropyltrimethoxysilane (commercially available as X-41-1056 from Shin-Etsu Chemical Co., Ltd.)

Examples of the silane compound having formula (1) wherein p=1 and q=r=0 and $R^1$ is polydimethylsiloxane include compounds having the general formula (3).

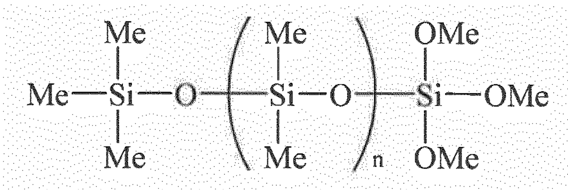 (3)

In formula (3), preferably n is an integer of 0 to 50, more preferably an integer of 5 to 40, and even more preferably an integer of 10 to 30. If n exceeds 50, the compound has more silicone oil properties, with the solubility of surface-treated organosol in various resins being limited. A compound having the average structure of formula (3) wherein n=30 is commercially available as X-24-9822 from Shin-Etsu Chemical Co., Ltd.

Examples of the silane compound having formula (1) wherein p=1, q=1 and r=0 include methylhydrogendimethoxysilane, methylhydrogendiethoxysilane, dimethyldimethoxysilane, dimethyldiethoxysilane, methylethyldimethoxysilane, diethyldimethoxysilane, diethyldiethoxysilane, methylpropyldimethoxysilane, methylpropyldiethoxysilane, diisopropyldimethoxysilane, phenylmethyldimethoxysilane, vinylmethyldimethoxysilane, γ-glycidoxypropylmethyldimethoxysilane, γ-glycidoxypropylmethyldiethoxysilane, β-(3,4-epoxycyclohexyl)ethylmethyldimethoxysilane, γ-methacryloxypropylmethyldimethoxysilane, γ-methacryloxypropylmethyldiethoxysilane, γ-mercaptopropylmethyldimethoxysilane, γ-aminopropylmethyldiethoxysilane, and N-(2-aminoethyl)aminopropylmethyldimethoxysilane.

Examples of the silane compound having formula (1) wherein p=1, q=1 and r=1 include trimethylmethoxysilane, trimethylethoxysilane, triethylmethoxysilane, n-propyldimethylmethoxysilane, n-propyldiethylmethoxysilane, isopropyldimethylmethoxysilane, isopropyldiethylmethoxysilane, propyldimethylethoxysilane, n-butyldimethylmethoxysilane, n-butyldimethylethoxysilane, n-hexyldimethylmethoxysilane, n-hexyldimethylethoxysilane, n-pentyldimethylmethoxysilane, n-pentyldimethylethoxysilane, n-hexyldimethylmethoxysilane, n-hexyldimethylethoxysilane, n-decyldimethylmethoxysilane, and n-decyldimethylethoxysilane.

The organic solvent dispersion of titanium oxide solid-solution particles produced by the specified method may have any of the other properties specified above for the dispersion.

## EXAMPLES

Synthesis Examples, Examples and Comparative Examples are given below by way of illustration and not by way of limitation. All parts are by weight. The viscosity is measured at 25°C according to JIS Z8803, the weight average molecular weight (Mw) is measured by gel permeation chromatography (GPC) versus polystyrene standards, and the water content is measured by Karl Fischer's method. $D_{50}$ is a volume average 50% cumulative distribution diameter as measured by the dynamic light scattering method (Nanotrac by Nikkiso Co., Ltd.).

Reactants were purchased from chemical suppliers including Wako Pure Chemical Industries, Ltd. (abbreviated Wako), Shin-Etsu Chemical Co., Ltd. (abbreviated Shin-Etsu), and Kojundo Chemical Laboratory Co., Ltd. (abbreviated Kojundo).

### Example 1

A dispersion of silica-shelled titanium oxide solid-solution particles (tin 5 mol%, manganese 1 mol%) in ethanol was prepared through the following steps (A) to (E).

#### Step (A)

Sub-step (a)

An inorganic oxide colloidal water dispersion containing core/shell particles each consisting of a core of titanium-tin-manganese complex oxide and a shell of silicon oxide as dispersed phase in water as dispersing medium was prepared. First, a dispersion of titanium oxide particles serving as the core was prepared, followed by hydrolytic condensation of tetraethoxysilane, thereby yielding a colloidal solution of core/shell particles.

Specifically, 2.2 g of tin(IV) chloride pentahydrate (Wako) and 0.09 g of manganese(II) oxide (Kojundo) were added to 66.0 g of 36 wt% titanium(IV) chloride aqueous solution (TC-36 by Ishihara Sangyo Kaisha, Ltd.). They were thoroughly mixed and diluted with 1,000 g of deionized water. To the metal salt aqueous solution mixture, 250 g of 5 wt% aqueous ammonia (Wako) was gradually added for neutralization and hydrolysis, yielding a precipitate of titanium hydroxide containing tin and manganese. This titanium hydroxide slurry was at pH 8. The precipitate of titanium hydroxide was deionized by repeating deionized water addition and decantation. To the precipitate of titanium hydroxide containing tin and manganese after deionization, 100 g of 30 wt% aqueous hydrogen peroxide (Wako) was gradually added, whereupon stirring was continued at 60°C for 3 hours for full reaction. Thereafter, pure water was added for concentration adjustment, yielding a semitransparent solution of tin and manganese-containing peroxotitanic acid (solids concentration 1 wt%). An autoclave of 500 mL volume (TEM-D500 by Taiatsu Techno Co., Ltd.) was charged with 350 mL of the peroxotitanic acid solution synthesized as above, which was subjected to hydrothermal reaction at 200°C and 1.5 MPa for 120 minutes. The reaction mixture in the autoclave was taken out via a sampling tube to a vessel in water bath at 25°C whereby the mixture was rapidly cooled to quench the reaction, obtaining a titanium oxide dispersion.

Sub-step (b)

A separable flask equipped with a magnetic stirrer and thermometer was charged with 1,000 parts of the titanium oxide dispersion, 100 parts of ethanol, and 2.0 parts of ammonia at room temperature (25°C), followed by magnetic stirring. The separable flask was placed in an ice bath and cooled until the temperature of the contents reached 5°C. 18 parts of tetraethoxysilane (KBE-04 by Shin-Etsu) was added to the separable flask, which was mounted in μReactor EX (Shikoku Instrumentation Co., Inc.) where microwave was applied at a frequency 2.45 GHz and a power 1,000 W for 1 minute while magnetic stirring was continued. The thermometer was monitored during the microwave heating step, confirming that the temperature of the contents reached 85°C. The mixture was filtered through qualitative filter (Advantec 2B), obtaining a dilute colloidal dispersion. By heating in vacuum (50°C/10 mmHg), the dilute colloidal dispersion was

concentrated to 10 wt%, yielding a metal oxide particle water dispersion (A-1). The dispersion had a diameter $D_{50}$ of 16 nm.

Step (B)

A 2-L four-neck separable flask equipped with a Dimroth condenser, nitrogen inlet, thermometer and mechanical stirring blade was charged with 400 g of the metal oxide particle water dispersion (A-1) having a solids content of 10 wt%. To the flask, 300 g of methyltrimethoxysilane (KBM-13 by Shin-Etsu) was added, followed by vigorous stirring at 200 rpm. With stirring, reaction took place between the dispersion and the alkoxysilane. It was observed that the dispersion turned uniform. It was also observed that the temperature of the dispersion elevated from 25°C to 52°C.

Step (C)

With stirring at 100 rpm, 1,500 g of ethanol was added to the dispersion from step (B) whereby the dispersion was diluted into a reaction mixture (X).

Step (D)

A portion (10 mL) of the reaction mixture (X) was fed into an upper bucket of a centrifuge tube with ultrafiltration membrane (trade name Amicon® Ultra-15 centrifugal filter unit fitted with 100,000 NMWL membrane, Merck Millipore). The centrifuge tube was spun at 2,000 rpm for 15 minutes. A clear liquid (9 mL), designated Filtrate-0, was exuded into the lower bucket while the concentrate (1 mL) was left in the upper bucket. See step (D) in FIG. 1.

Step (E)

In the upper bucket, ethanol (9 mL) was added to the concentrate (1 mL) of step (D), which was re-dispersed or re-slurried. The centrifuge tube filled with the re-slurried dispersion (total 10 mL) was spun at 2,000 rpm for 15 minutes. A clear liquid (9 mL), designated Filtrate-1, was exuded in the lower bucket while the concentrate (1 mL) was left in the upper bucket. In the upper bucket, ethanol (9 mL) was added to the concentrate (1 mL), which was re-dispersed or re-slurried. The centrifuge tube filled with the re-slurried dispersion (total 10 mL) was spun at 2,000 rpm for 15 minutes. A clear liquid (9 mL), designated Filtrate-2, was exuded in the lower bucket while the concentrate (1 mL) was left in the upper bucket. Similar operation was repeated, obtaining Filtrate-3 and Filtrate-4. See step (E) in FIG. 1. Filtrate-0 to Filtrate-4 were analyzed for solids concentration and water content (Karl Fischer's method). The results are shown in Table 1.

The liquid (1 mL) finally left in the upper bucket was an ethanol dispersion of silica-shelled titanium oxide solid-solution particles (tin 5 mol%, manganese 1 mol%), designated Agent A-1. The dispersion (Agent A-1) had a diameter $D_{50}$ of 16 nm (see FIG. 2). Several droplets (ca. 0.2 mL) of 1M solution of trisacetylacetonatochromium(III) (Kanto Chemical Co., Ltd.) in hexadeuterioacetone (Cambridge Isotope Laboratories Inc.) and 7 mg of octamethylcyclotetrasiloxane as internal standard were added to 1 mL of the dispersion (Agent A-1), which was transferred to a NMR tube of PTFE with a diameter 5 mm and analyzed by $^{29}$Si NMR spectroscopy. Analytical conditions included gated decoupling, a pulse sequence of 45° pulses and pulse interval 6 seconds, magnetic field strength 11.75 T, and repetition of 7,200 times. FIG. 3 shows the NMR spectrum. The dispersion (Agent A-1) was determined to have a solids content of 11 wt% and a water content of 0.6 wt%.

Table 1

| Filtrate No. | Filtrate -0 | Filtrate -1 | Filtrate -2 | Filtrate -3 | Filtrate -4 |
|---|---|---|---|---|---|
| Water content (wt%) | 12.1 | 8.5 | 6.3 | 2.1 | 0.8 |
| Solids content (wt%) | 6.7 | 2.4 | 1.2 | 0.2 | 0.0 |

Example 2

An ethanol dispersion of silica-shelled titanium oxide solid-solution particles (tin 5.0 mol%, manganese 0.5 mol%) was prepared.

The procedure of Example 1 was repeated except that in step (A), the amount of manganese (II) oxide (Kojundo) was changed from 0.09 g to 0.045 g. The resulting ethanol dispersion, designated Agent A-2, had a diameter $D_{50}$ of 17 nm. The dispersion (Agent A-2) had a solids content of 10 wt% and a water content of 0.6 wt%.

Example 3

An ethanol dispersion of silica-shelled titanium oxide solid-solution particles (tin 5.0 mol%, manganese 2.0 mol%) was prepared.

The procedure of Example 1 was repeated except that in step (A), the amount of manganese (II) oxide (Kojundo) was changed from 0.09 g to 0.18 g. The resulting ethanol dispersion, designated Agent A-3, had a diameter $D_{50}$ of 16 nm. The dispersion (Agent A-3) had a solids content of 11 wt% and a water content of 0.8 wt%.

Example 4

An isopropyl alcohol dispersion of silica-shelled titanium oxide solid-solution particles (tin 5.0 mol%, manganese 1.0 mol%) was prepared.

The procedure of Example 1 was repeated except that in step (E), isopropyl alcohol was used instead of ethanol. The resulting isopropyl alcohol dispersion, designated Agent A-4, had a diameter $D_{50}$ of 15 nm. The dispersion (Agent A-4) had a solids content of 10 wt% and a water content of 0.6 wt%.

Example 5

An ethanol dispersion of silica-shelled titanium oxide solid-solution particles (tin 5.0 mol%, manganese 1.0 mol%) was prepared.

The procedure of Example 1 was repeated except that in step (B), γ-glycidoxypropyltrimethoxysilane (KBM-403 by Shin-Etsu) was used instead of methyltrimethoxysilane (KBM-13). The resulting ethanol dispersion, designated Agent A-5, had a diameter $D_{50}$ of 16 nm. The dispersion (Agent A-5) had a solids content of 11 wt% and a water content of 0.7 wt%.

Example 6

A propylene glycol monomethyl ether dispersion of silica-shelled titanium oxide solid-solution particles (tin 5.0 mol%, manganese 1.0 mol%) was prepared.

The procedure of Example 1 was repeated except that in step (B), γ-acryloxypropyltrimethoxysilane (KBM-5103 by Shin-Etsu) was used instead of methyltrimethoxysilane (KBM-13). There was obtained an ethanol dispersion. This ethanol dispersion was mixed with an equal volume of propylene glycol monomethyl ether (PGM), from which ethanol was volatized off under a pressure of 350 mmHg. The resulting PGM dispersion, designated Agent A-6, had a diameter $D_{50}$ of 14 nm. The dispersion (Agent A-6) had a solids content of 10 wt% and a water content of 0.6 wt%.

Comparative Example 1

An ethanol dispersion of silica-shelled titanium oxide particles (free of tin and manganese in solid solution) was prepared.

The procedure of Example 1 was repeated except that in step (A), tin (IV) chloride and manganese (II) oxide were omitted. The resulting ethanol dispersion, designated Agent A-R1, had a diameter $D_{50}$ of 22 nm. The dispersion (Agent A-R1) had a solids content of 10 wt% and a water content of 0.6 wt%.

Comparative Example 2

An ethanol dispersion of silica-shelled titanium oxide solid-solution particles (tin 5.0 mol%) was prepared.

The procedure of Example 1 was repeated except that in step (A), manganese (II) oxide was omitted. The resulting ethanol dispersion, designated Agent A-R2, had a diameter $D_{50}$ of 14 nm. The dispersion (Agent A-R2) had a solids content of 11 wt% and a water content of 0.7 wt%.

Comparative Example 3

An ethanol dispersion of silica-shelled titanium oxide solid-solution particles (manganese 1.0 mol%) was prepared.

The procedure of Example 1 was repeated except that in step (A), tin (IV) chloride was omitted. The resulting ethanol dispersion, designated Agent A-R3, had a diameter $D_{50}$ of 15 nm. The dispersion (Agent A-R3) had a solids content of 10 wt% and a water content of 0.7 wt%.

Comparative Example 4

An ethanol dispersion of silica-shelled titanium oxide solid-solution particles (tin 5.0 mol%, vanadium 0.5 mol%) was prepared.

The procedure of Example 1 was repeated except that in step (A), 0.13 g of vanadium (IV) oxysulfate hydrate was used instead of 0.09 g of manganese (II) oxide. The resulting ethanol dispersion, designated Agent A-R4, had a diameter $D_{50}$ of 18 nm. The dispersion (Agent A-R4) had a solids content of 10 wt% and a water content of 0.7 wt%.

Synthesis Example 1

Preparation of silicone coating composition (Agent B-1)

A 1-L flask equipped with a stirrer, condenser and thermometer was charged with 336 g of methyltriethoxysilane and 94 g of isobutanol. To the solution which was stirred under ice cooling and kept below 5°C, 283 g of water-dispersed colloidal silica (Snowtex O, Nissan Chemical Industries Ltd., average particle size 15-20 nm, $SiO_2$ content 20 wt%) below 5°C was added. The mixture was stirred under ice cooling for 3 hours and at 20-25°C for a further 12 hours, after which 27 g of diacetone alcohol and 50 g of propylene glycol monomethyl ether were added. Then 3 g of a 10 wt% sodium propionate aqueous solution as a curing catalyst and 0.2 g of a polyether-modified silicone KP-341 (Shin-Etsu) as a leveling agent were added, followed by adjustment to pH 6-7 with acetic acid. It was diluted with isobutanol to a nonvolatile content of 20 wt% (JIS K6833) and aged at room temperature for 5 days, yielding a colloidal silica-laden organopolysiloxane composition having a viscosity of 4.2 $mm^2/s$ and a Mw of 1,100. This silicone coating composition is designated Agent B-1.

Example 7

A coating composition A1B1 was prepared by mixing 100 g (resin solids 20 g) of the silicone coating composition (Agent B-1) with 36 g (solids 4.0 g) of the organic solvent dispersion of titanium oxide solid-solution particles (Agent A-1, solids content 11 wt%) in an Agent A/Agent B solids content ratio of 20 wt%. A series of coating compositions A2B1, A3B1, A4B1, A5B1, and A6B1 were similarly prepared by mixing Agent B-1 with titanium oxide dispersions Agent A-2, A-3, A-4, A-5, and A-6 while the Agent A/Agent B solids content ratio was fixed at 20 wt%.

Comparative Example 5

A coating composition AR1B1 was prepared by mixing 100 g (resin solids 20 g) of the silicone coating composition (Agent B-1) with 36 g (solids 4.0 g) of the organic solvent dispersion of titanium oxide solid-solution particles (Agent A-R1, solids content 11 wt%) in an Agent A/Agent B solids content ratio of 20 wt%. A series of coating compositions AR2B1, AR3B1, and AR4B1 were similarly prepared by mixing Agent B-1 with titanium oxide dispersions Agent A-R2, A-R3, and A-R4 while the Agent A/Agent B solids content ratio was fixed at 20 wt%.

Comparative Example 6

A one-part silicone coating composition, designated Agent C-1, was prepared by the procedure of Patent Document 1 (JP-A 2014-019611). At this point, the amount of titanium oxide water dispersion (equivalent to product (A-1) in step (A) of Example 1 of the present disclosure) was increased so as to reach the same solids content ratio of titanium oxide component as the coating composition A1B1 of Example 7. Specifically, a 500-mL flask was charged with 50 g of methyltrimethoxysilane (KBM-13 by Shin-Etsu), to which was added a mixture of 30 g of water-dispersed silica sol (Snowtex O, Nissan Chemical Industries Ltd., average particle size 15-20 nm, $SiO_2$ content 20 wt%), 60 g of the dispersion (A-1, solids content 10 wt%) obtained in step (A) in Example 1, and 0.3 g of acetic acid. As the mixture was added, an exotherm resulting from hydrolysis was noted, and the internal temperature elevated to 50°C. At the end of addition, stirring was continued at 60°C for 3 hours to bring hydrolysis to completion.

Thereafter, 56 g of cyclohexanone was admitted, and the liquid was heated under atmospheric pressure until the liquid temperature reached 92°C, for thereby distilling off methanol formed by hydrolysis and promoting condensation. The liquid was combined with 75 g of isopropanol as diluent, 0.1 g of leveling agent KP-341 (Shin-Etsu), 0.3 g of acetic acid, and 0.8 g of 10% sodium propionate aqueous solution (Wako). The mixture was stirred and passed through a paper filter, obtaining 230 g of a one-part silicone coating composition having a nonvolatile concentration of 20% (Agent C-1). Agent C-1 had a viscosity of 3.2 $mm^2/s$ and Mw of 1,200.

Comparative Example 7

A one-part silicone coating composition, designated Agent C-2, was prepared by the procedure of Patent Document 1 (JP-A 2014-019611). At this point, the amount of titanium oxide water dispersion (equivalent to product (A-1) in step (A) of Example 1 of the present disclosure) was increased so as to reach the same solids content ratio of titanium oxide component as the coating composition A1B1 of Example 7, and the distilling step at an intermediate stage was extended. Specifically, a 500-mL flask was charged with 50 g of methyltrimethoxysilane (KBM-13 by Shin-Etsu), to which was added a mixture of 30 g of water-dispersed silica sol (Snowtex O, Nissan Chemical Industries Ltd., average particle size 15-20 nm, $SiO_2$ content 20 wt%), 60 g of the dispersion (A-1, solids content 10 wt%) obtained in step (A) in Example 1, and 0.3 g of acetic acid. As the mixture was added, an exotherm resulting from hydrolysis was noted, and the internal temperature elevated to 50°C. At the end of addition, stirring was continued at 60°C for 3 hours to bring hydrolysis to completion.

Thereafter, 100 g of cyclohexanone was admitted, and the liquid was heated under atmospheric pressure until the liquid temperature reached 98°C, for thereby distilling off methanol formed by hydrolysis and promoting condensation. The liquid was combined with 75 g of isopropanol as diluent, 0.1 g of leveling agent KP-341 (Shin-Etsu), 0.3 g of acetic acid, and 0.8 g of 10% sodium propionate aqueous solution (Wako). The mixture was stirred and passed through a paper filter, obtaining 200 g of a one-part silicone coating composition having a nonvolatile concentration of 20% (Agent C-2). Agent C-2 had a viscosity of 5.6 $mm^2/s$ and Mw of 2,300.

Synthesis Example 2

Preparation of acrylic primer

A 2-L flask equipped with a stirrer, condenser and thermometer was charged with 152 g of diacetone alcohol as a solvent and heated at 80°C under a nitrogen stream. To the flask, a 240-g portion of a previously prepared monomer mix solution (containing 67.5 g of 2-[2'-hydroxy-5'-(2-methacryloxyethyl)phenyl]-2H-benzotriazole under the trade name of RUVA-93 from Otsuka Chemical Co., Ltd., 90 g of $\gamma$-methacryloxypropyltrimethoxysilane, 270 g of methyl methacrylate, 22.5 g of glycidyl methacrylate, and 350 g of diacetone alcohol), and a 54-g portion of a previously prepared solution of 2.3 g of 2,2'-azobis(2-methylbutyronitrile) as a polymerization initiator in 177.7 g of diacetone alcohol were added in sequence. The solution was allowed to react at 80°C for 30 minutes, after which the remainder of the monomer mix solution and the remainder of the initiator solution were simultaneously added dropwise at 80-90°C over 1.5 hours. Stirring continued at 80-90°C for a further 5 hours.

The thus obtained vinyl polymer having trimethoxysilyl and organic UV-absorbing groups attached to side chains had a viscosity of 5,050 mPa·s. The copolymer contained 15 wt% of the UV-absorbing monomer and 20 wt% of the vinyl monomer having trimethoxysilyl attached to a side chain via a Si-C bond. The copolymer had a Mw of 60,800. A solvent-dispersed colloidal silica (PMA-ST by Nissan Chemical Industries, Ltd.) was added to the copolymer solution so that silica accounted for 30 wt% of the polymer solids, and propylene glycol monomethyl ether was added so as to give an overall solids concentration of 20 wt%. This is designated Acrylic Primer (P-1).

Preparation of laminate

The acrylic primer (P-1) was flow coated on one surface of a polycarbonate resin substrate (PCSP-660T, Takiron Co., Ltd.). The primer was held at room temperature for 15 minutes, with the substrate kept slant, and cured at 120°C for 1 hour to form a primer layer on the substrate. Each of silicone coating compositions (A1B1, A2B1, A3B1, A4B1, A5B1, A6B1 in Examples and AR1B1, AR2B1, AR3B1, AR4B1, C-1 and C-2 in Comparative Examples) was flow coated on the primer layer. The coating was held at room temperature for 15 minutes, with the substrate kept slant, and cured at 120°C for 1 hour to form a topcoat layer.

Initial film flaw

The surface of the topcoat film was inspected for flaws. The film of Agent C-1 in Comparative Example 6 showed flaws due to cissing. This is because the amount of the water dispersion was increased so that the solvent component was changed to a state inadequate for coating. The film of Agent C-2 in Comparative Example 7, wherein the distilled-off amount was increased, showed no cissing. The films of the remaining coating compositions (A1B1, A2B1, A3B1, A4B1, A5B1, A6B1, AR1B1, AR2B1, AR3B1, and AR4B1) showed a sound state without cissing.

Haze of initial cured film

A cured film was evaluated for mar resistance according to ASTM D1044 by mounting a Taber abrasion tester with wheels CS-10F, measuring a haze after 500 cycles under a load of 500 g, and calculating a haze difference (ΔHz) before and after the abrasion test. All the films of coating compositions (A1B1, A2B1, A3B1, A4B1, A5B1, A6B1, AR1B1, AR2B1, AR3B1, AR4B1, and C-2) laminated showed a ΔHz of up to 10. The film of C-1 was not measured for haze since cissing was found.

Stability of coating composition

The coating compositions (A1B1, A2B1, A3B1, A4B1, A5B1, A6B1, AR1B1, AR2B1, AR3B1, AR4B1, and C-2) were subjected to an aging test in an oven (Espec Perfect Oven) at 40°C for 1 week. The silicone resin component in A1B1, A2B1, A3B1, A4B1, A5B1, A6B1, AR1B1, AR2B1, AR3B1, and AR4B1 had a Mw of 1,100 at the initial and a Mw in the range of 1,200 to 1,600 after the aging test. The silicone resin component in C-2 had a Mw of 2,300 at the initial and a Mw of 3,800 after the aging test.

Haze of aged film

A film after the aging test was evaluated for haze according to ASTM D1044 by mounting a Taber abrasion tester with wheels CS-10F, measuring a haze after 500 cycles under a load of 500 g, and calculating a haze difference (ΔHz) before and after the abrasion test. The film of Agent C-2 laminated showed a ΔHz of 16. In Agent C-2, a more amount of water dispersion was used to increase the content of titanium oxide, and the distill-off amount of solvent was accordingly increased. Agent C-2 had an adequate solvent content for coating, but showed low stability as coating composition. In contrast, the films of coating compositions (A1B1, A2B1, A3B1, A4B1, A5B1, A6B1, AR1B1, AR2B1, AR3B1, and AR4B1) laminated showed a ΔHz of up to 10. Patent Document 1 (JP-A 2014-019611) refers nowhere to the stability of coating compositions. It is demonstrated that the use of the organic solvent dispersion of the invention is effective for prolonging the life of coating compositions.

Weather resistance test

The known acrylic primer (P-1) was coated on one surface of a polycarbonate substrate of 5.0 mm thick (PCSP-660T, Takiron Co., Ltd.) and cured under standard conditions. Each of silicone coating compositions (A1B1, A2B1, A3B1, A4B1, A5B1, A6B1, AR1B1, AR2B1, AR3B1, AR4B1, and C-2) prior to aging was flow coated on the primer layer and cured. The thickness of the cured films was measured using a high-speed Fourier transform thin-film interferometer (F-20 by Filmetrics, Inc.). For all samples, the primer layer had a thickness of $1\times10^{-5}$ m and the hardcoat layer had a thickness of $5\times10^{-6}$ m.

Prior to setting of conditions for a weathering test, an outdoor UV dose was measured using a UV illuminometer (EYE UV illuminometer UVP365-1 by Iwasaki Electric Co., Ltd.). When measured at noon on fine Vernal Equinox Day (20th March, 2012) at Matsuida, Annaka City, Gunma Pref., Japan, the UV dose was $1\times10^{1}$ W/m$^2$. This UV dose is typical in consideration of the prior art report (International Commission on Illumination, 20, 47 (1972), CIE Publication). In the practice of the invention, the weather resistance of a cured film is set so as to correspond to outdoor exposure over 10 years. Assume that the annual average daily sunshine time is 12 hours, the accumulative energy quantity is estimated to be 12 (h/day) $\times$ 365 (day/year) $\times$ 10 (year) $\times$ 10 (W/m$^2$) = 438 (kWh/m$^2$). With a margin secured, the outdoor accumulative energy quantity over 10 years is approximated to be 500 kWh/m$^2$. To acquire test results in a short time, an experiment was conducted over a test time of 500 hours using a tester having an illumination intensity of $1\times10^{3}$ W/m$^2$.

After the conditions of the weathering test were set as above, the cured film was evaluated for weather resistance, using EYE Super UV tester W-151 (Iwasaki Electric Co., Ltd.). As mentioned above, the test was in an environment including UV radiation at an intensity of $1\times10^{3}$ W/m$^2$, a temperature of 60°C, and a humidity of 50% RH. A time passed until cracks or fissures formed in the cured film under the conditions was recorded. The laminates of coating compositions (A1B1, A2B1, A3B1, A4B1, A5B1, A6B1, and C-2) showed no cracks for a test period of 500 hours whereas the laminates of coating compositions (AR1B1, AR2B1, AR3B1, and AR4B1) cracked in 200 hours. It is thus evident that the organic solvent dispersion of titanium oxide within the scope of the invention facilitates formulation of a silicone coating composition and enhances the storage stability thereof while maintaining weather resistance equivalent to Patent Document 1 (JP-A 2014-019611).

The invention offers many advantages. An organic solvent dispersion of titanium oxide solid-solution particles is readily prepared. The dispersion of titanium oxide particles may be used in a variety of coating compositions for the purposes of refractive index adjustment, antireflection, and UV shielding, or as CVD primers or UV absorbers compatible

with photocatalyst particles. The dispersion of titanium oxide particles is improved in shelf stability. The dispersion of titanium oxide particles is applicable not only to silicone base coating compositions, but also to acrylic silicone, acrylic, melamine, urethane, acrylic urethane, epoxy, paraffin and alkyd base coating compositions.

Although some preferred embodiments have been described, many modifications and variations may be made thereto in light of the above teachings. It is therefore to be understood that the invention may be practised otherwise than as specifically described without departing from the scope of the general teachings herein.

Notes

The entire disclosures of Japanese Patent Applications 2014-084632 and 2014-119709, the priorities of which are claimed herein, are incorporated herein by reference.

In respect of numerical ranges disclosed in the present description it will of course be understood that in the normal way the technical criterion for the upper limit is different from the technical criterion for the lower limit, i.e. the upper and lower limits are intrinsically distinct proposals.

For the avoidance of doubt it is confirmed that in the general description above, in the usual way the proposal of general preferences and options in respect of different features of the dispersion, preparing method, composition and use method constitutes the proposal of general combinations of those general preferences and options for the different features, insofar as they are combinable and compatible and are put forward in the same context.

## Claims

1. A dispersion of core/shell type tetragonal titanium oxide solid-solution particles in organic solvent, wherein
said core/shell type particles each consist of a core of tetragonal titanium oxide having tin and manganese incorporated in solid solution and a shell of silicon oxide around the core,
said core/shell type particles have a volume basis 50% cumulative distribution diameter ($D_{50}$) of up to 50 nm, as measured by the dynamic light scattering method using laser light,
the amount of tin incorporated in solid solution is such that the molar ratio of titanium to tin (Ti/Sn) is from 10/1 to 1,000/1, and the amount of manganese incorporated in solid solution is such that the molar ratio of titanium to manganese (Ti/Mn) is from 10/1 to 1,000/1;
the dispersion further comprising a silicon compound or (partial) hydrolytic condensate thereof in an amount of 5 to 50 parts by weight based on 100 parts by weight of the core/shell type tetragonal titanium oxide solid-solution particles, the silicon compound being of the general formula (1) :

$$R^1_pR^2_qR^3_rSi\ (OR^4)_{4-p-q-r} \qquad (1)$$

wherein $R^1$ is hydrogen, substituted or unsubstituted, monovalent hydrocarbon group of 1 to 20 carbon atoms, or diorganosiloxy group of up to 50 silicon atoms, $R^2$, $R^3$ and $R^4$ are each independently alkyl groups of 1 to 6 carbon atoms, p is an integer of 1 to 3, q is 0, 1 or 2, r is 0, 1 or 2, and the sum p+q+r is an integer of 1 to 3.

2. The organic solvent dispersion of core/shell type tetragonal titanium oxide solid-solution particles of claim 1 wherein said core/shell type tetragonal titanium oxide solid-solution particles comprise from 5 to 50% by weight of the shell-forming silicon oxide.

3. The organic solvent dispersion of core/shell type tetragonal titanium oxide solid-solution particles of claim 1 or 2 in which in formula (1) p = 1 and q = r = 0.

4. The organic solvent dispersion of core/shell type tetragonal titanium oxide solid-solution particles of any one of claims 1 to 3 having a solids concentration of 0.1 to 30% by weight including said organosilicon compound component from the silicon compound of formula (1).

5. The organic solvent dispersion of core/shell type tetragonal titanium oxide solid-solution particles of any one of claims 1 to 4 wherein the organic solvent is selected from methanol, ethanol, 1-propanol (IPA), butanol, diacetone alcohol (DAA), propylene glycol monomethyl ether (PGM), propylene glycol monomethyl ether acetate (PGMAc), and mixtures thereof.

6. The organic solvent dispersion of core/shell type tetragonal titanium oxide solid-solution particles of any one of claims 1 to 5 wherein the water content is not more than 1% by weight.

7. The organic solvent dispersion of core/shell type tetragonal titanium oxide solid-solution particles of any one of claims 1 to 6 comprising from 1 to 40% by weight of said core/shell-type particles.

8. A method for preparing a dispersion of core/shell type tetragonal titanium oxide solid-solution particles in organic solvent, comprising the steps of:

(A) furnishing a dispersion of core/shell type tetragonal titanium oxide solid-solution particles in water, said core/shell type particles each consisting of a core of tetragonal titanium oxide having tin and manganese incorporated in solid solution and a shell of silicon oxide around the core,
(B) adding a silicon compound or a (partial) hydrolytic condensate thereof to the water dispersion, and effecting reaction to form a reaction mixture,
the silicon compound having the general formula (1):

$$R^1{}_pR^2{}_qR^3{}_rSi\ (OR^4)_{\ 4-p-q-r} \qquad (1)$$

wherein $R^1$ is hydrogen, a substituted or unsubstituted, monovalent hydrocarbon group of 1 to 20 carbon atoms, or a diorganosiloxy group of up to 50 silicon atoms, $R^2$, $R^3$ and $R^4$ are each independently an alkyl group of 1 to 6 carbon atoms, p is an integer of 1 to 3, q is 0, 1 or 2, r is 0, 1 or 2, and the sum p+q+r is an integer of 1 to 3,
(C) optionally, diluting the reaction mixture with organic solvent,
(D) concentrating the reaction solution from step (B) or (C) to a concentrated dispersion, and
(E) solvent replacement by organic solvent.

9. A method according to claim 8 in which step (C) is included and the dilution factor in step (C) is from 2 to 20 times.

10. A method according to claim 8 or 9 in which in step (D) the dispersion is concentrated to a solids concentration of from 1 to 30% by weight.

11. A method according to claim 8, 9 or 10 in which in step (E) the solvent replacement comprises heat concentration or ultrafiltration.

12. A method according to any one of claims 8 to 11 wherein the water content of the resulting dispersion is not more than 1% by weight.

13. A method according to any one of claims 8 to 12 wherein the resulting dispersion is in accordance with any one of claims 1 to 7.

14. A method according to any one of claims 8 to 13 in which in formula (1) p = 1 and q = r = 0.

15. A coating composition comprising an organic solvent dispersion of core/shell type tetragonal titanium oxide solid-solution particles of any one of claims 1 to 7.

16. A coating composition of claim 15, comprising a silicone coating composition in admixture with the organic solvent dispersion of core/shell type tetragonal titanium oxide solid-solution particles.

## Patentansprüche

1. Dispersion von tetragonalen Titanoxid-Festlösungs-Teilchen vom Kern/Hülle-Typ in organischem Lösungsmittel, wobei
die Teilchen vom Kern/Hülle-Typ jeweils aus einem Kern aus tetragonalem Titandioxid, der in fester Lösung aufgenommenes Zinn und Mangan aufweist, und aus einer Hülle aus Siliciumoxid rund um den Kern bestehen,
die Teilchen vom Kern/Hülle-Typ einen durch das dynamische Lichtstreuverfahren unter Verwendung von Laserlicht gemessenen 50%-Summenverteilungsdurchmesser auf Volumenbasis ($D_{50}$) von bis zu 50 nm aufweisen;
die Menge an in fester Lösung aufgenommenem Zinn so ist, dass das Molverhältnis zwischen Titan und Zinn (Ti/Sn) 10/1 bis 1000/1 beträgt und die Menge an in fester Lösung aufgenommenem Mangan so ist, dass das Molverhältnis zwischen Titan und Mangan (Ti/Mn) 10/1 bis 1000/1 beträgt;
wobei die Dispersion weiters eine Siliciumverbindung oder hydrolytisches (partielles) Kondensat davon in einer Menge von 5 bis 50 Gewichtsteilen, bezogen auf 100 Gewichtsteile der tetragonalen Titanoxid-Festlösungs-Teilchen

vom Kern/Hülle-Typ, umfasst, wobei die Siliciumverbindung der allgemeinen Formel (1) entspricht:

$$R^1_pR^2_qR^3_rSi\ (OR^4)_{4-p-q-r} \qquad (1)$$

worin $R^1$ Wasserstoff, eine substituierte oder unsubstituierte einwertige Kohlenwasserstoffgruppe mit 1 bis 20 Kohlenstoffatomen oder eine Diorganosiloxygruppe mit bis zu 50 Siliciumatomen ist, $R^2$, $R^3$ und $R^4$ jeweils unabhängig voneinander Alkylgruppen mit 1 bis 6 Kohlenstoffatomen sind, p eine ganze Zahl von 1 bis 3 ist, q = 0, 1 oder 2 ist, r = 0, 1 oder 2 ist und die Summe p+q+r eine ganze Zahl von 1 bis 3 ist.

**2.** Organische Lösungsmitteldispersion von tetragonalen Titanoxid-Festlösungs-Teilchen vom Kern/Hülle-Typ nach Anspruch 1, wobei die tetragonalen Titanoxid-Festlösungs-Teilchen vom Kern/Hülle-Typ 5 bis 50 Gew.-% des Hülle-bildenden Siliciumoxids umfassen.

**3.** Organische Lösungsmitteldispersion von tetragonalen Titanoxid-Festlösungs-Teilchen vom Kern/Hülle-Typ nach Anspruch 1 oder 2, wobei in Formel (1) p = 1 ist und q = r = 0 ist.

**4.** Organische Lösungsmitteldispersion von tetragonalen Titanoxid-Festlösungs-Teilchen vom Kern/Hülle-Typ nach einem der Ansprüche 1 bis 3 mit einer Feststoffkonzentration von 0,1 bis 30 Gew.-%, einschließlich der Organosilicium-Verbindungskomponente aus der Siliciumverbindung nach Formel (1).

**5.** Organische Lösungsmitteldispersion von tetragonalen Titanoxid-Festlösungs-Teilchen vom Kern/Hülle-Typ nach einem der Ansprüche 1 bis 4, wobei das organische Lösungsmittel aus Methanol, Ethanol, 1-Propanol (IPA), Butanol, Diacetonalkohol (DAA), Propylenglykolmonomethylether (PGM), Propylenglykolmonomethyletheracetat (PGMAc) und Gemischen davon ausgewählt ist.

**6.** Organische Lösungsmitteldispersion von tetragonalen Titanoxid-Festlösungs-Teilchen vom Kern/Hülle-Typ nach einem der Ansprüche 1 bis 5, wobei der Wassergehalt nicht mehr als 1 Gew.-% beträgt.

**7.** Organische Lösungsmitteldispersion von tetragonalen Titanoxid-Festlösungs-Teilchen vom Kern/Hülle-Typ nach einem der Ansprüche 1 bis 6, umfassend 1 bis 40 Gew.-% der Teilchen vom Kern/Hülle-Typ.

**8.** Verfahren zur Herstellung einer Dispersion von tetragonalen Titanoxid-Festlösungs-Teilchen vom Kern/Hülle-Typ in organischem Lösungsmittel, umfassend die folgenden Schritte:

(A) Bereitstellen einer Dispersion von tetragonalen Titanoxid-Festlösungs-Teilchen vom Kern/Hülle-Typ in Wasser, wobei die Teilchen vom Kern/Hülle-Typ jeweils aus einem Kern aus tetragonalem Titanoxid, der in fester Lösung aufgenommenes Zinn und Mangan aufweist, und aus einer Hülle aus Siliciumoxid rund um den Kern bestehen;
(B) Zusetzen einer Siliciumverbindung oder eines hydrolytischen (partiellen) Kondensats davon zu der Wasserdispersion und Berwirken einer Reaktion, um ein Reaktionsgemisch zu bilden,
wobei die Siliciumverbindung die allgemeine Formel (1) aufweist:

$$R^1_pR^2_qR^3_rSi\ (OR^4)_{4-p-q-r} \qquad (1)$$

worin $R^1$ Wasserstoff, eine substituierte oder unsubstituierte einwertige Kohlenwasserstoffgruppe mit 1 bis 20 Kohlenstoffatomen oder eine Diorganosiloxygruppe mit bis zu 50 Siliciumatomen ist, $R^2$, $R^3$ und $R^4$ jeweils unabhängig voneinander eine Alkylgruppe mit 1 bis 6 Kohlenstoffatomen sind, p eine ganze Zahl von 1 bis 3 ist, q = 0, 1 oder 2 ist, r = 0, 1 oder 2 ist und die Summe p+q+r eine ganze Zahl von 1 bis 3 ist;
(C) gegebenenfalls Verdünnen des Reaktionsgemischs mit organischem Lösungsmittel,
(D) Aufkonzentrieren der Reaktionslösung aus Schritt (B) oder (C) zu einer konzentrierten Dispersion und
(E) Austauschen des Lösungsmittels gegen organisches Lösungsmittel.

**9.** Verfahren nach Anspruch 8, worin Schritt (C) umfasst ist und der Verdünnungsfaktor in Schritt (C) das 2- bis 20fache beträgt.

**10.** Verfahren nach Anspruch 8 oder 9, worin die Dispersion in Schritt (D) auf eine Feststoffkonzentration von 1 bis 30 Gew.-% aufkonzentriert wird.

**11.** Verfahren nach Anspruch 8, 9 oder 10, worin der Lösungsmittelaustausch in Schritt (E) Wärmekonzentration oder Ultrafiltration umfasst.

**12.** Verfahren nach einem der Ansprüche 8 bis 11, worin der Wassergehalt der resultierenden Dispersion nicht mehr als 1 Gew.-% beträgt.

**13.** Verfahren nach einem der Ansprüche 8 bis 12, worin die resultierende Dispersion einem der Ansprüche 1 bis 7 entspricht.

**14.** Verfahren nach einem der Ansprüche 8 bis 13, worin in Formel (1) p = 1 ist und q = r = 0 ist.

**15.** Beschichtungszusammensetzung, umfassend eine organische Lösungsmitteldispersion von tetragonalen Titanoxid-Festlösungs-Teilchen vom Kern/Hülle-Typ nach einem der Ansprüche 1 bis 7.

**16.** Beschichtungszusammensetzung nach Anspruch 15, umfassend eine Siliciumbeschichtungszusammensetzung im Gemisch mit der organischen Lösungsmitteldispersion von tetragonalen Titanoxid-Festlösungs-Teilchen vom Kern/Hülle-Typ.

## Revendications

**1.** Dispersion de particules de solution solide d'oxyde de titane tétragonal de type noyau/enveloppe dans un solvant organique, dans laquelle
lesdites particules de type noyau/enveloppe sont chacune constituées d'un noyau d'oxyde de titane tétragonal dans lequel sont incorporés de l'étain et du manganèse en solution solide et d'une enveloppe d'oxyde de silicium autour du noyau,
lesdites particules de type noyau/enveloppe ont un diamètre à 50 % de la distribution cumulative ($D_{50}$) en volume allant jusqu'à 50 nm, tel que mesuré par le procédé de diffusion de lumière dynamique à l'aide d'une lumière laser, la quantité d'étain incorporée en solution solide est telle que le rapport molaire du titane à l'étain (Ti/Sn) est de 10/1 à 1 000/1, et la quantité de manganèse incorporée en solution solide est telle que le rapport molaire du titane au manganèse (Ti/Mn) est de 10/1 à 1 000/1 ;
la dispersion comprenant en outre un composé de silicium ou un condensat hydrolytique (partiel) de celui-ci en une quantité de 5 à 50 parties en poids sur la base de 100 parties en poids des particules de solution solide d'oxyde de titane tétragonal de type noyau/enveloppe, le composé de silicium répondant à la formule générale (1) :

$$R^1_pR^2_qR^3_rSi\ (OR^4)_{4-p-q-r} \qquad (1)$$

dans laquelle $R^1$ représente un atome d'hydrogène, un groupe hydrocarbure monovalent, substitué ou non substitué, de 1 à 20 atomes de carbone, ou un groupe diorganosiloxy contenant jusqu'à 50 atomes de silicium, $R^2$, $R^3$ et $R^4$ sont chacun indépendamment un groupe alkyle de 1 à 6 atomes de carbone, p représente un nombre entier de 1 à 3, q vaut 0, 1 ou 2, r vaut 0, 1 ou 2, et la somme p+q+r est un nombre entier de 1 à 3.

**2.** Dispersion dans un solvant organique de particules de solution solide d'oxyde de titane tétragonal de type noyau/enveloppe selon la revendication 1 dans laquelle lesdites particules de solution solide d'oxyde de titane tétragonal de type noyau/enveloppe comprennent de 5 à 50 % en poids de l'oxyde de silicium formant l'enveloppe.

**3.** Dispersion dans un solvant organique de particules de solution solide d'oxyde de titane tétragonal de type noyau/enveloppe selon la revendication 1 ou 2 dans laquelle dans la formule (1) p = 1 et q = r = 0.

**4.** Dispersion dans un solvant organique de particules de solution solide d'oxyde de titane tétragonal de type noyau/enveloppe selon l'une quelconque des revendications 1 à 3 ayant une concentration en matières solides de 0, 1 à 30 % en poids en incluant ledit composant de composé d'organosilicium du composé de silicium de formule (1).

**5.** Dispersion dans un solvant organique de particules de solution solide d'oxyde de titane tétragonal de type noyau/enveloppe selon l'une quelconque des revendications 1 à 4 dans laquelle le solvant organique est choisi parmi le méthanol, l'éthanol, le 1-propanol (IPA), le butanol, l'alcool de diacétone (DAA), l'éther monométhylique de propylène glycol (PGM), l'acétate d'éther monométhylique de propylène glycol (PGMAc), et les mélanges de ceux-ci.

**6.** Dispersion dans un solvant organique de particules de solution solide d'oxyde de titane tétragonal de type noyau/enveloppe selon l'une quelconque des revendications 1 à 5 dans laquelle la teneur en eau n'est pas supérieure à 1 % en poids.

**7.** Dispersion dans un solvant organique de particules de solution solide d'oxyde de titane tétragonal de type noyau/enveloppe selon l'une quelconque des revendications 1 à 6 comprenant de 1 à 40 % en poids desdites particules de type noyau/enveloppe.

**8.** Procédé de préparation d'une dispersion de particules de solution solide d'oxyde de titane tétragonal de type noyau/enveloppe dans un solvant organique, comprenant les étapes suivantes :

(A) fourniture d'une dispersion de particules de solution solide d'oxyde de titane tétragonal de type noyau/enveloppe dans de l'eau, lesdites particules de type noyau/enveloppe étant chacune constituée d'un noyau d'oxyde de titane tétragonal dans lequel sont incorporés de l'étain et du manganèse en solution solide et d'une enveloppe d'oxyde de silicium autour du noyau,
(B) ajout d'un composé de silicium ou d'un condensat hydrolytique (partiel) de celui-ci à la dispersion dans l'eau, et réalisation d'une réaction pour former un mélange réactionnel,
le composé de silicium répondant à la formule générale (1) :

$$R^1_pR^2_qR^3_rSi\ (OR^4)_{4-p-q-r} \qquad (1)$$

dans laquelle $R^1$ représente un atome d'hydrogène, un groupe hydrocarbure monovalent, substitué ou non substitué, de 1 à 20 atomes de carbone, ou un groupe diorganosiloxy contenant jusqu'à 50 atomes de silicium, $R^2$, $R^3$ et $R^4$ sont chacun indépendamment un groupe alkyle de 1 à 6 atomes de carbone, p représente un nombre entier de 1 à 3, q vaut 0, 1 ou 2, r vaut 0, 1 ou 2, et la somme p+q+r est un nombre entier de 1 à 3,
(C) facultativement, dilution du mélange réactionnel avec un solvant organique,
(D) concentration de la solution réactionnelle de l'étape (B) ou (C) jusqu'à obtention d'une dispersion concentrée, et
(E) remplacement du solvant par un solvant organique.

**9.** Procédé selon la revendication 8 dans lequel l'étape (C) est incluse et le facteur de dilution à l'étape (C) est de 2 à 20 fois.

**10.** Procédé selon la revendication 8 ou 9 dans lequel à l'étape (D) la dispersion est concentrée à une concentration en matières solides de 1 à 30 % en poids.

**11.** Procédé selon la revendication 8, 9 ou 10 dans lequel à l'étape (E) le remplacement du solvant comprend une concentration thermique ou une ultrafiltration.

**12.** Procédé selon l'une quelconque des revendications 8 à 11 dans lequel la teneur en eau de la dispersion résultante n'est pas supérieure à 1 % en poids.

**13.** Procédé selon l'une quelconque des revendications 8 à 12 dans lequel la dispersion résultante est selon l'une quelconque des revendications 1 à 7.

**14.** Procédé selon l'une quelconque des revendications 8 à 13 dans lequel dans la formule (1) p = 1 et q = r = 0.

**15.** Composition de revêtement comprenant une dispersion dans un solvant organique de particules de solution solide d'oxyde de titane tétragonal de type noyau/enveloppe selon l'une quelconque des revendications 1 à 7.

**16.** Composition de revêtement selon la revendication 15, comprenant une composition de revêtement de silicone en mélange avec la dispersion dans un solvant organique de particules de solution solide d'oxyde de titane tétragonal de type noyau/enveloppe.

# FIG.1

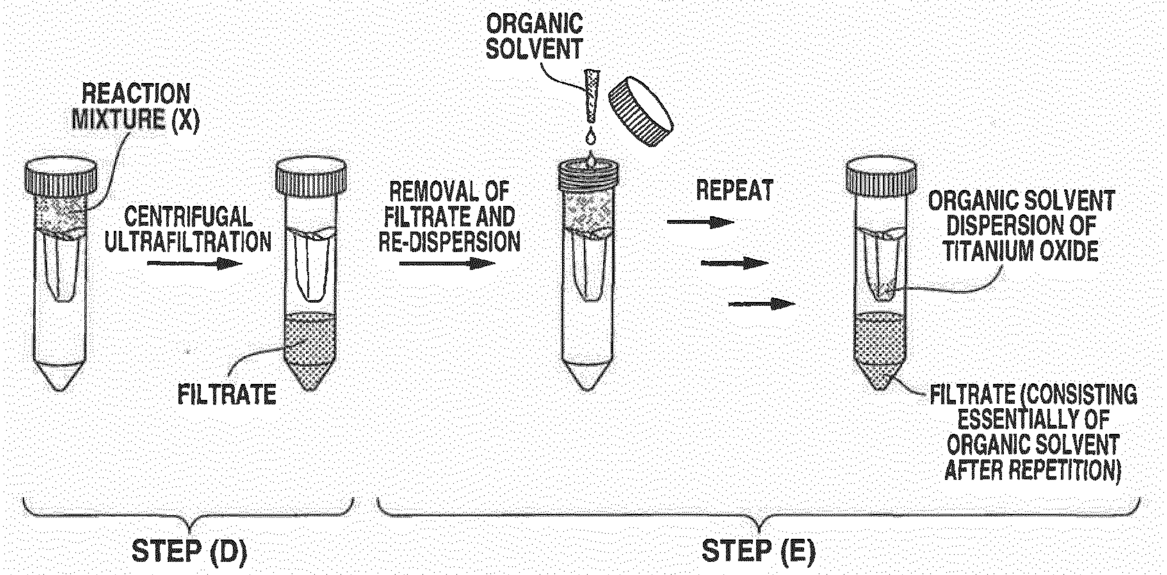
ORGANIC SOLVENT
REACTION MIXTURE (X)
CENTRIFUGAL ULTRAFILTRATION
REMOVAL OF FILTRATE AND RE-DISPERSION
REPEAT
ORGANIC SOLVENT DISPERSION OF TITANIUM OXIDE
FILTRATE
FILTRATE (CONSISTING ESSENTIALLY OF ORGANIC SOLVENT AFTER REPETITION)
STEP (D)
STEP (E)

# FIG.2

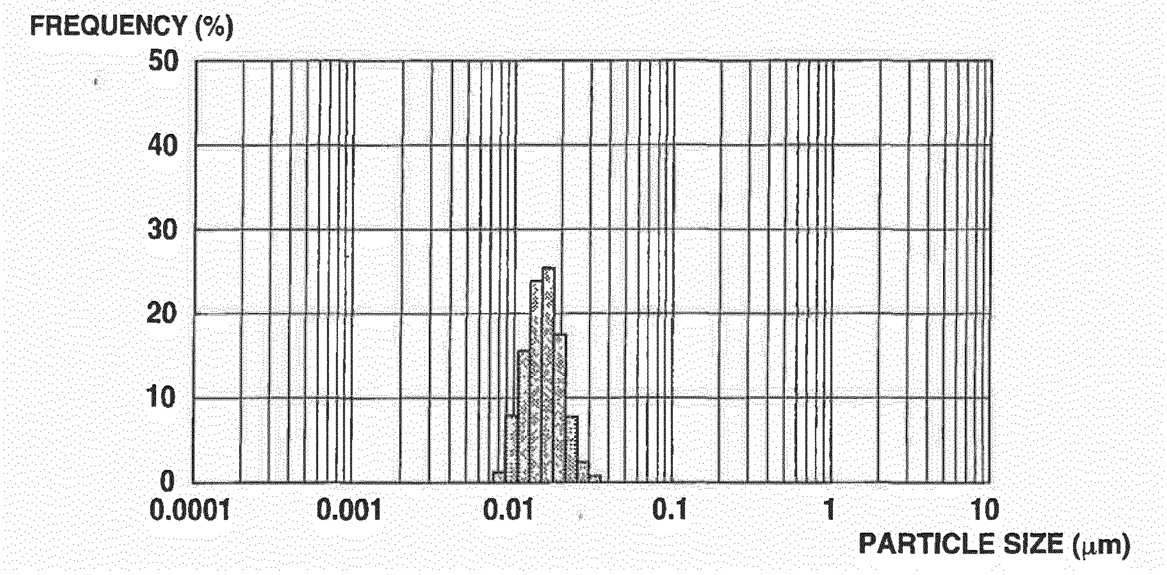
FREQUENCY (%)
50
40
30
20
10
0
0.0001
0.001
0.01
0.1
1
10
PARTICLE SIZE (μm)

FIG.3

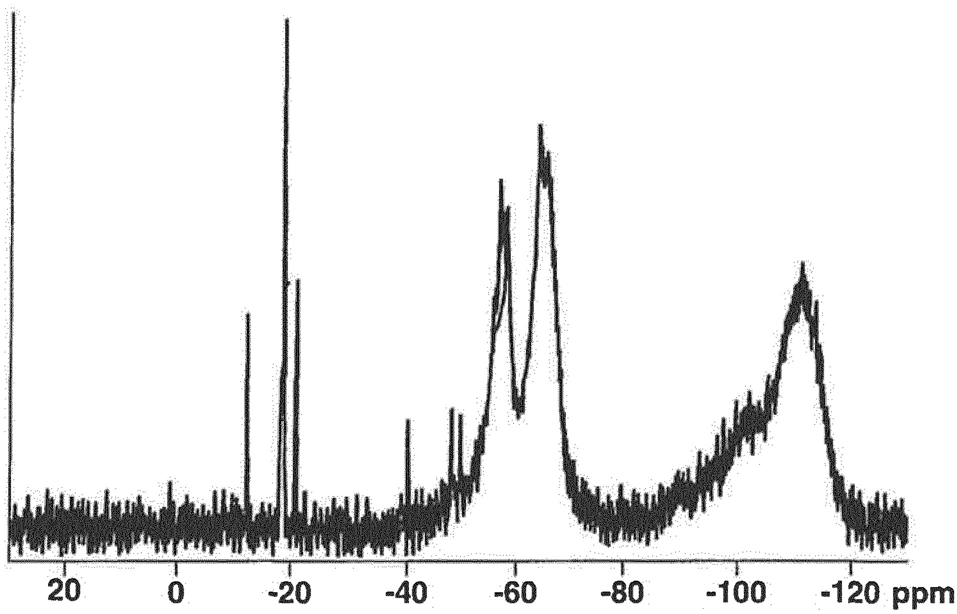

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- EP 2865720 A
- EP 2868717 A
- JP 2014019611 A
- US 20140023855 A
- EP 2708513 A
- JP 2012077267 A
- JP 2014084632 A
- JP 2014119709 A

### Non-patent literature cited in the description

- *Organometallics,* 2008, vol. 27 (4), 500-502
- *J. Org. Chem.,* 1980, vol. 45, 1164
- *J. Org. Chem.,* 1999, vol. 64, 7707